(19) Europäisches Patentamt
European Patent Office
Office européen des brevets

(11) EP 1 617 569 B1

(12) EUROPÄISCHE PATENTSCHRIFT

(45) Veröffentlichungstag und Bekanntmachung des Hinweises auf die Patenterteilung:
**19.09.2007 Patentblatt 2007/38**

(51) Int Cl.:
***H04B 7/06*** *(2006.01)* ***H04L 27/26*** *(2006.01)*

(21) Anmeldenummer: **05014739.6**

(22) Anmeldetag: **07.07.2005**

# (54) Verfahren zur Übertragung digitaler Nachrichtensignale mit mehreren Antennen

Method for transmission of digital information signals with a plurality of antennas

Procédé pour la transmission des signaux d'information numériques avec une pluralité d'antennes

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **15.07.2004 DE 102004034424**

(43) Veröffentlichungstag der Anmeldung:
**18.01.2006 Patentblatt 2006/03**

(73) Patentinhaber: **Deutsches Zentrum für Luft- und Raumfahrt e.V.**
**51147 Köln (DE)**

(72) Erfinder:
- **Kaiser, Stefan, Dr.**
  **82205 Gilching (DE)**
- **Dammann, Armin**
  **82266 Inning (DE)**
- **Raulefs, Ronald**
  **80538 München (DE)**

(74) Vertreter: **von Kirschbaum, Albrecht**
**Patentanwalt**
**Postfach 1520**
**82102 Germering (DE)**

(56) Entgegenhaltungen:
**EP-A- 1 289 168**

- **RAULEFS R ET AL: "The doppler spread - gaining diversity for future mobile radio systems" GLOBECOM'03. 2003 - IEEE GLOBAL TELECOMMUNICATIONS CONFERENCE. CONFERENCE PROCEEDINGS. SAN FRANCISCO, DEC. 1 - 5, 2003, IEEE GLOBAL TELECOMMUNICATIONS CONFERENCE, NEW YORK, NY : IEEE, US, Bd. VOL. 7 OF 7, 1. Dezember 2003 (2003-12-01), Seiten 1301-1305, XP010677505 ISBN: 0-7803-7974-8**
- **DAMMANN A ET AL: "TRANSMIT/RECEIVE-ANTENNA DIVERSITY TECHNIQUES FOR OFDM SYSTEMS" EUROPEAN TRANSACTIONS ON TELECOMMUNICATIONS, WILEY & SONS, CHICHESTER, GB, Bd. 13, Nr. 5, September 2002 (2002-09), Seiten 531-538, XP001133087 ISSN: 1124-318X**
- **XIAONNNG PENG ET AL: "Packet transmission in fourth-generation broadband multimedia wireless communication systems" INFORMATION, COMMUNICATIONS AND SIGNAL PROCESSING, 2003 AND FOURTH PACIFIC RIM CONFERENCE ON MULTIMEDIA. PROCEEDINGS OF THE 2003 JOINT CONFERENCE OF THE FOURTH INTERNATIONAL CONFERENCE ON SINGAPORE 15-18 DEC. 2003, PISCATAWAY, NJ, USA,IEEE, Bd. 2, 15. Dezember 2003 (2003-12-15), Seiten 916-920, XP010701273 ISBN: 0-7803-8185-8**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft ein Verfahren zur Übertragung digitaler Nachrichtensignale von einem mehrere Signalaussendeeinrichtungen oder Signalaussendeeinrichtungsgruppen, wie z.B. Antennen oder Antennengruppen, aufweisenden Sender zu einem Empfänger eines Übertragungssystems, z.B. eines Funkübertragungssystems, über ein Übertragungsmedium, das am Empfänger zu einer Varianz der Leistung der Signale in der Zeit und damit zu nicht fehlerfreier Übertragung führen kann, unter Verwendung einer Zeitdiversitätsmaßnahme, gemäß welcher die digitalen Nachrichtensignale für die Signalaussendeeinrichtungen bzw. Signalaussendeeinrichtungsgruppen mit unterschiedlichen Dopplerspreizsignalen multipliziert werden.

Die Mehrwegeausbreitung des Signals im Übertragungskanal von Funksystemen verursacht konstruktive und destruktive Überlagerungen des Signals an der Empfangsantenne. Kritisch ist vor allem der daraus resultierende Signalschwund, der dazu führen kann, dass die Qualität der Funkverbindung sehr schlecht wird und die Verbindung nicht mehr aufrecht erhalten werden kann.

Es sind mehrere Verfahren bekannt, die eingesetzt werden können, um dem Signalschwund entgegenzuwirken.

Beispielsweise aus dem Buch von J. G. Proakis: "Digital Communications", New York, McGraw-Hill, 1995 ist die Kanalcodierung bekannt, die auf Kosten von Redundanz im Datenstrom Übertragungsfehler in begrenztem Maße korrigieren kann. Eine solche Kanalcodierung verringert die spektrale Effizienz des Systems, da Redundanz in den Datenstrom eingefügt werden muss. Bei heutigen Rundfunksystemen wie DAB und DVB, aber auch bei Mobilfunksystemen wie z.B. GSM und UMTS liegen diese Verluste in der Größenordung von 50%.

Eine andere Methode, um einem Signalschwund entgegenzuwirken, ist die aus dem Buch von R. van Nee und R. Prasad: "OFDM for Wireless Multimedia Communications", Artech House Publishers, 2000 bekannte Leistungsregelung, die bei starken Signaldämpfungen die Sendeleistung anhebt, um die Verbindung aufrecht zu erhalten. Eine derartige Leistungsregelung erhöht die Interferenz in einem Funksystem, da dadurch andere Teilnehmer stärker gestört werden können. Ferner widerstrebt dieser Ansatz dem Ziel, den Durchsatz an Daten zu optimieren, da verstärkt Sendeleistung in ungünstigen Übertragungskanälen verschwendet wird, die dann aber nicht mehr für die guten Übertragungskanäle zur Verfügung steht.

In dem bereits erwähnten Buch von J. G. Proakis und aus dem Artikel von S. Kaiser: "Spatial transmit diversity techniques for broadband OFDM systems" in Proc. IEEE Global Telecommun. Conf. (GLOBECOM 2000), San Francisco, USA, Seiten 1824-1828, Nov./Dec. 2000 sind Diversitätstechniken beschrieben, bei denen mehrere Sende- und/oder Empfangsantennen eingesetzt werden, wodurch mehrere unabhängig voneinander gestörte Signale am/im Empfänger überlagert werden und die Datendetektion zuverlässiger wird. Hierbei gibt es Diversitätstechniken, die sowohl die Zeitals auch die Frequenzrichtung ausnutzen. Im Zeitbereich arbeiten diese Techniken bislang mit einem einhergehenden Verlust von Signalenergie und einer Störung der Nachbarsignale.

Aus den Artikeln von V. Tarokh, N. Seshadri und A. R. Calderbank: "Space-Time Codes for High Data Rate Wireless Communication: Performance Criterion and Code Construction" in IEEE Transactions on Information Theory, Vol. 44, No. 2, Seiten 744-764, März 1998 und S. M. Alamouti: "A simple transmit diversity technique for wireless communications" in IEEE Journal on Selected Areas in Communications, Vol. 16, No. 8, Seiten 1451-1458, Oktober 1998 ist das sogenannte Space-Time-Coding bekannt, das zusätzlich Redundanz in "Raumrichtung" einfügt. Dabei werden über mehrere Sendeantennen gleichzeitig verschiedene codierte Signale abgestrahlt, die über eine oder mehrere Empfangsantennen empfangen werden. Bei der Verwendung von Space-Time-Coding ist empfangsseitig ein geeigneter Decoder zur Verfügung zu stellen.

In den Artikeln von L. C. Godara: "Applications of Antenna Arrays to Mobile Communications, Part I: Performance Improvement, Feasibility, and System Considerations" in Proceedings of the IEEE, Vol. 85, No.7, Seiten 1031-1060 und L. C. Godara: "Applications of Antenna Arrays to Mobile Communications, Part II: Beam-Forming and Direction-of-Arrival Considerations" in Proceedings of the IEEE, Vol. 85, No.8, Seiten 1195-1245 sind intelligente Antennen beschrieben, die auf "intelligente" Art mittels eines adaptiven Antennenprozessors mehrere Signale in Empfangs- oder Senderichtung mit verschiedenen Antennenelementen kombinieren.

Die Sendesignale werden mittels Antennenkeulen in Richtung der besten Signalwege für den Empfänger ausgesendet. Die zur Verfügung stehende Sendeleistung wird optimal gebündelt und Interferenz im zellularen Funksystem minimiert. Die Empfangssignale werden durch das Ausrichten der Keulen einer intelligenten Antenne am Empfänger optimal empfangen und Störsignale werden unterdrückt. Da sich bei intelligenten Antennen das Signal einer Sendekeule im Kanal immer noch dispersiv ausbreitet, kommt es dennoch zu Signaldämpfungen, die mit einer der anderen zuvor erwähnten Methoden behoben werden müssen, wobei auch deren Nachteile nicht vermieden werden können.

Wie aus dem Artikel von R. Raulefs, A. Dammann, S. Kaiser und G. Auer: "The Doppler spread - gaining diversity for future mobile radio systems" in Proceedings IEEE Global Telecommunications Conference (GLOBECOM 2003), San Francisco, CA, USA, Dezember 2003, Vol. 3, Seiten 1301-1305 zu entnehmen ist, wird Zeitdiversität durch künstliche Zunahme der Dopplerspreizung mit mehreren Antennen am Sender auf Kosten zusätzlicher Zwischenträger-Interferenz (ICI) gewonnen.

Der Erfindung liegt die Aufgabe zu Grunde, die negativen Auswirkungen des Signalschwunds weiter zu reduzieren und dabei die erforderliche Sendeleistung und die dadurch verursachte Interferenz im Übertragungssystem zu verringern.

Gemäß der Erfindung, die sich auf ein Verfahren zur Übertragung digitaler Nachrichtensignale der eingangs genannten Art bezieht, wird diese Aufgabe dadurch gelöst, dass die unterschiedlichen Dopplerspreizsignale, mit denen die digitalen Nachrichtensignale für die verschiedenen Signalaussendeeinrichtungen bzw. Signalaussendeeinrichtungsgruppen multipliziert werden, während eines Symbols konstant sind und nur in Symbolintervallen aktualisiert werden, so dass die auszusendenden digitalen Nachrichtensignale für die verschiedenen Signalaussendeeinrichtungen bzw. Signalaussendeeinrichtungsgruppen durch die stufenförmigen und daher diskontinuierlichen Dopplerspreizsignale diskontinuierlich verschieden modifiziert und somit spektral gespreizt ausgesendet werden und der Empfänger in der Lage ist, das digitale Nachrichtensignal auf Grund der zusätzlichen Diversität korrekt zu detektieren.

In Funksystemen wird durch das Verfahren nach der Erfindung am Sender durch zeitdispersive diskontinuierliche Verschiebung das Sendesignal an mehreren Antennen oder Antennengruppen verschieden modifiziert, so dass der Empfänger in der Lage ist, das Signal aufgrund der zusätzlichen Diversität korrekt zu detektieren. Die zeitdispersive diskontinuierliche Veränderung des Sendesignals wird Verlustfrei und somit ohne Energieverlust des Sendesignals und ohne Störung der Nachbarsendesignale durchgeführt. Das Verfahren nach der Erfindung reduziert die negativen Auswirkungen des Signalschwunds im Mehrwegeausbreitungska-nals; somit reduziert es die erforderliche Sendeleistung und die dadurch verursachte Interferenz im Funksystem.

Ein wesentliches Merkmal der Erfindung besteht darin, dass die Signale an den verschiedenen Antennen bzw. Signalaussendeeinrichtungen des Senders zeitlich diskontinuierlich versetzt gesendet werden. Dies kann als eine zeitliche Spreizung des Sendesignals angesehen werden. Eine Spreizung im Frequenzbereich erhöht die Zeitselektivität im Spektrum des empfangenen Signals. Eine deterministische Zeitselektivität des Spektrums kann z.B. im Falle eines Schwundkanals ohne zeitliche Selektivität diese künstlich erzeugen, um Fälle zu vermeiden, in denen sich das gesamte Spektrum in einem tiefen Schwund befindet und es zu erheblichen Störungen im Empfänger kommt, bis hin zum gesamten Systemausfall. Dies wird mit dem neuen Verfahren nach der Erfindung durch die künstliche Selektivität erreicht und in vorteilhafter Weise durch eine Kombination mit einer geeigneten Kanalcodierung noch verbessert.

Ist die zeitliche Varianz des Übertragungskanals langsam, z.B. in kleinen Funkzellen wie im Indoor-Bereich, so kann das Empfangssignal längere Zeit einem starken Signalschwund unterliegen und die Verbindung abbrechen. Wird eine künstliche Zeitvarianz herbeigeführt, so ist der zeitliche Signalschwund relativ kurz und die auftretenden Übertragungsfehler können in geeigneter Weise z.B. von einer Kanalcodierung korrigiert werden. Die Effizienz kann durch das Verwürfeln der Daten im Sender mit einem Interleaver verbessert werden. Bei einer OFDM-Übertragung kann dies ein Zeit- und Frequenzinterleaving sein. Der Empfänger stellt hierbei die entsprechenden Deinterleaver zur Verfügung.

Die diskontinuierliche zeitliche Selektivität erlaubt es, die Wahl des Diversitätsgrades beispielsweise bei Mehrträgersystemen nur noch auf Grund der maximal beherrschbaren verlustfreien Zeitselektivität durch das erfindungsgemäße Verfahren im existierenden physikalischen Übertragungssystem zu maximieren. Das Verfahren nach der Erfindung setzt die verwendbare Diversität auf einen maximalen Grad ohne den Verlust von Energie an Nachbarträger bzw. ohne die Störung von Nachbarträgern im System. Durch das verlustfreie Erhöhen der Diversität im System kann die spektrale Effizienz durch das Maximieren der Anzahl von Trägern innerhalb einer gegebenen Bandbreite optimiert werden. Durch das deterministische Einsetzen der diskontinuierlichen zeitlichen Selektivität kann der Effekt verlustfrei ausgenutzt werden.

Die diskontinuierliche zeitliche Selektivität ist nicht an eine drahtlose Übertragung gebunden, sondern ist in jedem Übertragungsmedium anwendbar, das am Empfänger an einer Varianz der Leistung des Signals in der Zeit und damit an einer nicht fehlerfreien Übertragung leidet. Dies kann durch Schwundkanäle oder beispielsweise auch durch Übertragungsmedien verursacht werden, die sich in Abhängigkeit von der Wellenlänge durch unterschiedliche Dämpfungseigenschaften auszeichnen.

In den Artikeln von A. Dammann, S. Kaiser: "Performance of low complex antenna diversity techniques for mobile OFDM systems" in Proceedings 3rd International Workshop on Multi-Carrier Spread-Spectrum & Related Topics (MC-SS'2001), Oberpfaffenhofen, Germany, September 2001, Seiten 53-64, ISBN 0-7923-7653-6 und von A. Dammann, S. Kaiser: "Transmit/receive antenna diversity techniques for OFDM systems" in European Transactions on Telecommunications, Vol. 13, No. 5, Seiten 531-538, September-Oktober 2002 ist das sogenannte Cyclic-Delay-Diversity-Verfahren beschrieben, welches die Diversität im Frquenzbereich eines OFDM-Systems maximiert, ohne zusätzliche Intersymbolinterferenzen (ISI) hervorzurufen. Die diskontinuierliche zeitliche Selektivität kann in vorteilhafter Weise mit dem Cyclic-Delay-Diversity(CDD)-Verfahren verknüpft werden. Beide Techniken zusammen erschließen mit der räumlichen Komponente den potentiellen Diversitätsraum (Zeit- und Frequenzbereich) komplett. Durch das Verknüpfen beider Techniken kann man Übertragungssysteme mit einer zufälligen Dämpfungskomponente durch künstliche Selektivität in Frequenz und Zeit optimieren.

Das erfindungsgemäße Verfahren, das mit diskontinuierlicher zeitlicher Selektivität arbeitet, kann des weiteren vorteilhaft in Funkübertragungssystemen mit intelligenten Antennengruppen eingesetzt werden. Intelligente Antennengruppen formen den Sendestrahl, so dass Interferenz im Übertragungssystem vermieden werden kann. Jedoch wird durch die Reduzierung der räumlichen Sendekeulen die Zeit- und Frequenzvarianz vermieden. Hierdurch entsteht eine Reduzierung der Selektivität im Übertragungssystem, wodurch Fehler bis zu einem totalen Abbruch der Funkverbindung entstehen können. Die diskontinuierliche zeitliche Selektivität nach der Erfindung erlaubt es nun, diese Reduzierung verlustfrei durch die Modifikation des Sendesignals zu kompensieren und somit eine verlustfreie Übertragung zu gewähren.

Eine vorteilhafte Weiterbildung der Erfindung ist somit durch die Verknüpfung der erwähnten Merkmale zusätzlich mit dem Cyclic-Delay-Diversity(CDD)-Verfahren gegeben.

Hierbei wird der vorhandene Übertragungsraum im Zeit- und Frequenzbereich maximal ausgenutzt, was in zweckmäßiger Weise noch mit der Optimierung im Raum durch intelligente Antennengruppen verbunden werden kann, die gezielt den Empfänger durch die topographischen Gegebenheiten des Kanals ansprechen. Die entstehende künstliche Selektivität vermeidet eine fehlerhafte Kommunikation zwischen Sender und Empfänger, wobei diese Sicherheit durch die Verbindung mit einer geeigneten Kanalcodierung noch gesteigert werden kann.

Eine andere vorteilhafte Weiterbildung der Erfindung besteht darin, die einzelnen Sendekeulen mit Space-Time-Codierung geeignet zu kombinieren, bei der, wie bereits erläutert worden ist, Redundanz nicht nur in Zeit- und/ oder Frequenzrichtung in den Datenstrom eingefügt wird, sondern auch in "Raumrichtung". Dabei werden von den isotropen Sendeantennen verschiedene Signale abgestrahlt, die sich am Empfänger überlagern. Die Flexibilität von Space-Time-Coding lässt sich durch Sende- und Empfangsantennen mit mehreren Keulen, die paarweise aufeinander adaptiert sind, weiter steigern. Hiermit können getrennte Ausbreitungskanäle realisiert werden, welche die vorher erwähnte Signalüberlagerung am Empfänger verhindern und sowohl eine gezielte Verteilung der Information am Sender als auch eine Verarbeitung der empfangenen Signale und nicht nur deren Überlagerung an den einzelnen Keulen zulassen. Bei der Verwendung von Space-Time-Coding muss empfangsseitig ein geeigneter Decoder zur Verfügung stehen.

Die einzelnen Weiterbildungen der Erfindung, die auch in den unmittelbar oder mittelbar vom Anspruch 1 abhängigen Unteransprüchen angegeben sind, können miteinander kombiniert werden und ermöglichen so eine weitere Verbesserung der Übertragungseigenschaften eines mit dem Verfahren nach der Erfindung arbeitenden Systems.

Das erfindungsgemäße Verfahren und dessen Weiterbildungen verbessern die Möglichkeiten, die Sendeleistung gezielter auf den Empfänger auszurichten und dadurch die erforderliche Sendeleistung zu minimieren. Anstelle einer klassischen Kanalcodierung zur Korrektur von Restfehlern können bei Anwendung des Verfahrens nach der Erfindung auch Verfahren wie Multi-Carrier-Code-Division-Multiplexing (MC-CDM) eingesetzt werden, die keine Ratenverluste aufweisen und durch geeignete Ausnutzung von Zeit- und/oder Frequenzdiversität die Übertragungsqualität verbessern. Das MC-CDM-Verfahren ist in dem Artikel von S. Kaiser: "Performance of multi-carrier CDM and COFDM in fading channels" in Proceedings IEEE Global Telecommunications Conference (GLOBECOM'99), Rio de Janeiro, Brasilien, Seiten 847-851, Dezember 1999 beschrieben.

Die Anwendung des Verfahrens nach der vorliegenden Erfindung bietet auch neue Möglichkeiten der Zellplanung in Mobilfunksystemen. So kann ein Empfänger eines Mobilfunkgeräts seine Daten nicht nur von einer Basisstation erhalten, sondern mehrere Keulen unterschiedlicher Basisstationen können dem Empfänger Datensignale, die entsprechend der Erfindung oder Weiterbildungen davon modifiziert sind, senden. Stehen dem Mobilfunkgerät seinerseits mehrere Keulen zum Senden zur Verfügung, so kann dieses in umgekehrter Richtung mit seinem Sender seine Datensignale nicht nur an eine, sondern an mehrere Basisstationen entsprechend der Erfindung oder Weiterbildungen davon modifizieren. Diese beiden Möglichkeiten vereinfachen auch das Verfahren eines "Soft-Handovers", bei dem das Mobilfunkgerät die Basisstationen wechselt, wobei bereits eine Verbindung, über eine oder mehrere Keulen zur neuen Basisstation besteht, bevor die Verbindung über eine oder mehrere andere Keulen zur alten Basisstation abgebaut wird.

Es wird nun anhand von Zeichnungen, ausgehend vom Stand der Technik, ein Ausführungsbeispiel erläutert, bei dem das Verfahren nach der Erfindung in ein OFDM-System integriert und mit einer geeigneten Kanalcodierung verbunden ist. Es zeigen:

Fig.1 in Blockschaltbildform die Sender/Empfänger-Frontends eines bekannten Cyclic-Delay-Diversity (CDD)-OFDM-Übertragungssystems,

Fig.2 ebenfalls in Blockschaltbildform die Sender/Empfänger-Frontends eines gemäß der Erfindung arbeitenden Doppler-Diversity-OFDM-Übertragungssystems,

Fig.3 in zwei Diagrammen (a) und (b) spektrale Leistungsdichten,

Fig.4 in einem Diagramm Dopplerspreizsignale,

Fig.5 in einem Blockschaltbild die (De)Codierungs- und (De)Modulationsteile eines Simulationssystems,

Fig.6 bis Fig.9 in Diagrammen die Bitfehlerrate BER des Verfahrens nach der Erfindung im Vergleich zu einem kontinuierlichen Doppler-Diversity(DD)-Verfahren in Abhängigkeit vom Signal/Rausch-Verhältnis SNR [dB] für vier verschiedene Simulationsfälle, und

Fig.10 in einem Diagramm ebenfalls die Bitfehlerrate BER des Verfahrens nach der Erfindung im Vergleich zu einem kontinuierlichen Doppler-Diversity(DD)-Verfahren in Abhängigkeit vom Signal/Rausch-Verhältnis SNR [dB] für eine Simulation, bei der die Dopplerspreizung mit einem festgelegten Satz Sendeantennen variiert wird.

Delay- und Dopplerspreizung von Mehrwegeschwundkanälen sind als Diversitätsquellen in drahtlosen Kommunikationssystemen erkannt. Eine extensive Delay- und Dopplerspreizung können allerdings nichtvernachlässigbare NachbarIntersymbolinterferenzen (ISI; Inter-symbol interference) und/oder NachbarZwischenträgerinterferenzen (ICI; Intercarrier interference) in OFDM(Orthogonal Frequency Division Multiplex)-Systemen verursachen. Im nachfolgend erläuterten Ausführungsbeispiel der vorliegenden Erfindung wird ein Verfahren zur Steigerung der Dopplerspreizung des Mehrwegeschwundkanals ohne zusätzlich verursachtes ICI beschrieben. Der Grundgedanke besteht darin, das OFDM-Zeitbereichssignal vorverzerrt über mehrere Sendeantennen auszusenden. Dieses vorgeschlagene neue Verfahren kann zusätzlich bei bereits bestehenden OFDM-Systemen eingesetzt werden, ohne dass Änderungen am Empfänger erfolgen, was es standardkompatibel macht.

Seit einiger Zeit findet das Multiple-Input-Multiple-Out-put(MIMO)-Konzept bei den Entwicklungsaktivitäten für drahtlose Kommunikationssysteme infolge der höheren Kapazität im Vergleich zu Einantennensystemen reges Interesse. MIMO-Systeme verwenden im allgemeinen mehrere Antennen beim Sender und/oder beim Empfänger. 1993 wurde ein wenig komplexes Sendeantennen-Delay-Diversity-Schema für Einträger-Übertragungssysteme vorgeschlagen, das in dem Artikel von A. Wittneben: "A new bandwidth efficient transmit antenna modulation diversity scheme for linear digital modulation" in Proceedings IEEE International Conference on Communications (ICC 1993), Mai 1993, Seiten 1630-1634 beschrieben ist.

In engem Zusammenhang mit dieser Delay-Diversity-Lösung steht das sogenannte Cyclic-Delay-Diversity (CDD)-Schema für OFDM-Systeme, das in den bereits erwähnten Artikeln von A. Dammann, S. Kaiser: "Performance of low complex antenna diversity techniques for mobile OFDM systems" in Proceedings 3rd International Workshop on Multi-Carrier Spread-Spectrum & Related Topics (MC-SS'2001), Oberpfaffenhofen, Germany, September 2001, Seiten 53-64, ISBN 0-7923-7653-6 und von A. Dammann, S. Kaiser: "Transmit/receive antenna diversity techniques for OFDM systems" in European Transactions on Telecommunications, Vol. 13, No. 5, Seiten 531-538, September-Oktober 2002 beschrieben ist.

Das Cyclic-Delay-Diversity(CDD)-Schema steigert die Verzögerungsspreizung (delay spread) des Kanals, ruft aber keine zusätzliche Intersymbolinterferenz (ISI) hervor. In Bezug auf OFDM-Systeme steigern (zyklische) Delay-Diversity-Einrichtungen die Frequenzselektivität und vergrößern deshalb die ausnutzbare Diversität im Frequenzbereich. So wie die Frequenzselektivität ist auch der zeitvariante Schwund, d.h. die Zeitselektivität, als Diversitätsquelle erkannt worden.

In diesem Zusammenhang wird auf den Artikel von A. M. Sayeed und B. Aazhang : "Exploiting Doppler diversity in mobile wireless communications" in Proceedings 1997 Conference on Information Sciences and Systems (CISS 1997), Baltimore, MD, USA, 1997, Seiten 287-292 hingewiesen. Wie aus dem Artikel von R. Raulefs, A. Dammann, S. Kaiser und G. Auer: "The Doppler spread - gaining diversity for future mobile radio systems" in Proceedings IEEE Global Telecommunications Conference (GLOBECOM 2003), San Francisco, CA, USA, Dezember 2003, Vol. 3, Seiten 1301-1305 zu entnehmen ist, wird Zeitdiversität durch künstliche Zunahme der Dopplerspreizung mit mehreren Antennen am Sender auf Kosten zusätzlicher Zwischenträger-Interferenz (ICI) gewonnen. Durch das nachstehend erläuterte Ausführungsbeispiel des Verfahrens nach der Erfindung wird bei einem OFDM-Übertragungssystem die Zeitdiversität ohne den Nachteil zusätzlicher ICI gesteigert.

Zunächst wird das bekannte CDD-Konzept rekapituliert, da es das Gegenstück des hier vorgeschlagenen neuen Zeitdiversitätsschemas ist. Danach wird das neuartige Zeitbereich-Diversitätskonzept nach der Erfindung detailliert dargestellt und es wird mit Zeitdiversitätssystemen verglichen, die ICI hervorrufen.

In OFDM-Systemen verursacht die Verzögerungsspreizung von Mehrwegeschwundkanälen eine nichtflache Kanalübertragungscharakteristik im Frequenzbereich über die verfügbare Bandbreite. Tiefe Schwundeinbrüche können für manche Unterträger beobachtet werden, was bedeutet, dass Signale aus unterschiedlichen Ausbreitungswegen destruktiv überlagert sein können, wogegen andere eine konstruktive Überlagerung der verschiedenen Mehrwegeausbreitungswege zeigen können.

Die grundsätzliche Idee von Delay-Diversity-Systemen besteht schlechthin darin, verzögerte Replikas des Zeitbereichssignals über mehrere Sendeantennen auszusenden und somit die beobachtbare Verzögerungsspreizung am Empfänger zu steigern. Einfache Verzögerungen können jedoch ISI verursachen, da sie die maximal beobachtbare Kanalverzögerungsspreizung am Empfänger vergrößern. Dieses Problem kann für OFDM-Übertragungssysteme durch die Zuführung zyklischer Verzögerungen (zyklische Verschiebungen) an das Zeitbereichssignal gelöst werden, bevor die zyklische Erweiterung hinzugefügt wird, wie dies in Fig.1 gezeigt ist.

In Fig.1 sind die Frontends des Senders und des Empfängers des bekannten CDD-OFDM-Systems dargestellt. Dieses Schema verbessert die Frequenzselektivität der Kanalübertragungsfunktion ohne eine Zunahme der beobachtbaren Zeitbereich-Kanalverzögerungsspreizung am Empfänger. Die einer Fast Fourier Transformation (FFT) unterzogenen Signal-Unterträger 1,...,$N_{FFT}$ werden im Sender in einem OFDM-Modulator 1 kombiniert und zusammengefasst über ein Leistungsverteilglied 2 auf M Antennenkanäle geleitet. Danach folgen für jeden Antennenkanal m, 0,...,M-1 ein Zeitverzögerungsglied 3 für die Einführung einer zyklischen Verzögerung und ein Glied 4 zur Einführung einer zyklischen Erweiterung. Danach folgt in jedem Antennenkanal m die betreffende Sendeantenne 5, von denen aus die Aussendung auf einen Funkübertragungsweg 6 erfolgt. Im Empfänger des Funkübertragungssystems werden die von einer Empfangsantenne 7 aufgenommenen Signale über eine Einrichtung 8 zum Entfernen der zyklischen Erweiterung geführt und einem OFDM-Demodulator 9 eingegeben, so dass dann nach inverser FFT die Signal-Unterträger 1,...,$N_{FFT}$ wieder entnehmbar sind.

Da das im vorhergehenden Teil beschriebene CDD-System die Frequenzselektivität des Mehrwegekanals steigert, besteht der der Erfindung zu Grunde liegende Gedanke nun darin, die Zeitselektivität des Schwundkanals auf ähnliche Weise zu steigern. In Fig.2 zeigen die Frontends des Senders bzw. des Empfängers das allgemeine Konzept des durch die Erfindung vorgeschlagenen Verfahrens, wobei für sich entsprechende Elemente Bezugszeichen verwendet werden, die mit denjenigen von Fig.1 übereinstimmen. $\frac{1}{\sqrt{M}}\, s(t)$ soll das Zeitbereichssignal nach der OFDM-Modulation im einem OFDM-Modulator 1 und der Guard-Intervall-Einfügung sein.

Der durch das Leistungsverteilglied 2 eingeführte Faktor $\frac{1}{\sqrt{M}}$ hält die gesamte gesendete Leistung unabhängig von der Anzahl der Sendeantennen 5. Vor der Aussendung über die M Sendeantennen 5 und nach der in einem Erweiterungsglied 10 eingeführten zyklischen Erweiterung wird dieses Signal in jedem der M Antennenkanäle m, 0,..., $M$-1 getrennt in einem Multiplizierglied 11 mit einem Signal $\gamma_m(t)$ multipliziert. Von jeder der M Sendeantennen 5 zur Empfangsantenne 7 im Empfänger, der in seinem Aufbau demjenigen von Fig.1 entspricht, wird ein Mehrwegeschwundkanal mit $L$ Ausbreitungswegen und Kanalimpulsantworten

$$h_m(t,\tau) = \sum_{l=0}^{L-1} \alpha_{m,l}(t) \cdot \delta(\tau - \tau_l) \qquad (1)$$

angenommen, wobei die Mehrwegeverzögerungen $\tau_l$ für alle Unterkanäle $h_m(t,\tau)$, $m = 0, \ldots, M-1$ und $\alpha_{m,l}(t)$ statistisch unabhängiger Schwund für alle m = $0,\ldots,M-1$ und $l = 0,\ldots,L-1$ sind. Es ist festzustellen, dass die Durchschnittsleistung der zeitvarianten Impulsantwort $\sum_{l=0}^{L-1} E\left\{ \left|\alpha_{m,l}(t)\right|^2 \right\} = 1$ beträgt. Am Empfänger wird die Überlagerung aller Sendesignale als

$$r(t) = \frac{1}{\sqrt{M}} \sum_{l=0}^{L-1} s(t - \tau_l) \cdot \sum_{m=0}^{M-1} \alpha_{m,l}(t) \cdot \gamma_m(t - \tau_l) + n(t) \qquad (2)$$

beobachtet, wobei sich der Ausdruck $\sum_{m=0}^{M-1} \alpha_{m,l}(t) \cdot \gamma_m(t - \tau_l)$ daraus als $\alpha_l(t)$ abkürzen lässt und $n(t)$ additives weißes Gaußsches Rauschen ist. Da die Multiplikation zweier Zeitbereichssignale einer Faltung ihrer jeweiligen Frequenzbereichsdarstellungen entspricht, werden die Spektren der Kanalschwundprozesse $\alpha_{m,l}(t)$ modifiziert und entsprechend der Gleichung (2) überlagert. Dieses Verfahren lässt sich als eine Art von Spread-Spectrum-System betrachten, d.h. einer Spreizung des Sendesignals. In der Beschreibung wird allerdings die Schwundmodifizierung dem Kanal zugeteilt und dieses Schema als eine Kanaltransformation betrachtet, genauer als eine Spreizung des kanaleigenen Schwundprozesses. Darüber hinaus betont die Beschreibung die Standardkompatibilität des Verfahrens nach der Erfindung.

Nachfolgend liegt die Konzentration auf dem zu multiplizierenden Signal

$$\gamma_m(t) = e^{j2\pi \cdot f_{D_m} \cdot t}, m = 0, \ldots, M-1, \quad (3)$$

welches die spektrale Leistungsdichte (PSD; Power Spectrum Density) des Schwundprozesses $\alpha_{m,l}(t)$ zu Mittenfrequenzen $f_{D_m}$ verschiebt. Als Beispiel zeigt Fig.3 die spektrale Leistungsdichte (PSD) des Überlagerungsschwundprozesses $\alpha_l(t)$, wenn die Komponentenprozesse $\alpha_{m,l}(t)$ der Jakesschen Form mit $f_{Dmax}$ als maximaler Dopplerspreizung entsprechen. In Fig.3(a) ist die spektrale Leistungsdichte (PSD) des kanaleigenen Schwundprozesses $\alpha_{m,l}(t)$ und in Fig. 3(b) die spektrale Leistungsdichte (PSD) des modifizierten Schwundprozesses $\alpha_l(t)$ dargestellt.

Es wird ein OFDM-Übertragungssystem betrachtet, das eine Fast-Fourier-Transformationslänge (FFT-Länge) von $N_{FFT}$ und einen Unterträgerabstand von $\Delta f_{sc}$ verwendet. Die Spreizsignale $\gamma_m(t)$ werden dann zu Zeitpunkten $t = k \cdot T_s$ abgetastet, wobei $T_s = \frac{1}{N_{FFT} \cdot \Delta f_{sc}}$ gilt. Wird dann z.B. die Gleichung (3) verwendet, so erhält man

$$\gamma'_m(k) = \gamma_m(k \cdot T_s) = e^{j\frac{2\pi}{N_{FFT}} \cdot \frac{f_{D_m}}{\Delta f_{sc}} \cdot k}, m = 0, \ldots, M-1, \quad (4)$$

wobei $k$ der diskrete Zeitindex ist.

Die Signale $\gamma'_m(k)$ steigern die Schwundschwankungen während einer OFDM-Symbolperiode und verursachen deswegen zusätzliche ICI. Da Interesse daran besteht, die Zeitselektivität des Schwundprozesses zwischen OFDM-Symbolen zu steigern, besteht die Idee schlechthin darin, $\gamma'_m(k)$ während eines OFDM-Symbols konstant zu halten und jenes Signal nur in OFDM-Symbolintervallen zu aktualisieren. Wenn $N_{OFDM} = N_{FFT} + N_{Guard}$ die OFDM-Symbollänge einschließlich dem Guard-Intervall bezeichnet, können die modifizierten Spreizsignale ausgedrückt werden als

$$\gamma''_m(k) = \gamma'_m(\lfloor k \text{ div } N_{OFDM} \rfloor \cdot N_{OFDM}), m = 0, \ldots, M-1, \quad (5)$$

wobei "div" eine ganzzahlige Teilung bezeichnet, d.h. eine Teilung mit Rundung auf die nächste ganze Zahl nach $-\infty$ hin. Wird $\gamma(t)$ z.B. entsprechend der Gleichung (3) gewählt, so zeigt Fig.4 die Realteile der Spreizsignale $\gamma'(k)$ und $\gamma''(k)$ für $f_D = 0{,}2 \cdot \Delta f_{sc}$, $N_{Guard} = 5$ und $N_{FFT} = 1024$. Der Antennenindex $m$ wurde der Einfachheit halber fortgelassen. Da die zusätzliche Dopplerspreizung 20 % des Unterträgerabstandes beträgt, wird erwartet, dass $\gamma'(k)$ ernsthafte ICI verursacht. Im Gegensatz dazu ist $\gamma''(k)$ während der OFDM-Symbolperioden konstant, was die beobachtbare ICI lediglich von den kanaleigenen Schwundprozessen $\alpha_{m,l}(t)$ abhängig macht. Infolge der Stufenform der Dopplerspreizsignale lässt sich dieses Verfahren als diskontinuierliche Dopplerdiversität (DDD; Discontinuous Doppler Diversity) bezeichnen.

Es wird nun das Simulationssystem vorgestellt, das zum Nachweis der Wirksamkeit des DDD-Schemas verwendet wurde.

Für die Simulationen wird ein codiertes OFDMA-System betrachtet. Die Auslegungen des (De)Codier- und (De)Modulationsteils im Sender und Empfänger sind in Fig. 5 dargestellt. Der Sender besteht aus einer Quelle 12 der Signale, einem Kanalcodierer 13, einem Interleaver 14, einem Modulator 15 und einem Seriell-Parallel-Wandler 16. Der Empfänger enthält einen Parallel-Seriell-Wandler 17, einen Demodulator 18, einen Deinterleaver 19, einen Kanaldecodierer 20 und eine Senke 21 für die Signale. Am Sender werden im Kanalcodierer 13 die aus der Quelle 12 kommenden Informationsbits codiert, wobei ein Faltungscode mit Rate 1/3 mit Gedächtnistiefe 8 oder ein Turbocode mit Rate 1/3 verwendet wird.

Die Bits eines Codeworts werden dann im Interleaver 14 zufällig verwürfelt (interleaved), im Modulator 15 zu einer 4-QAM-Konstellation gemapped und im Seriell-Parallel-Wandler 16 einem OFDM-Rahmen zugeteilt, der aus 96 OFDM-Symbolen unter Verwendung von $N_{FFT}$ = 1024 Unterträgern besteht. Auf Seiten des Empfängers sorgt nach der Parallel-Seriell-Wandlung des OFDM-Rahmens im Parallel-Seriell-Wandler 17 der Demodulator 18 für Log-Likelihood-Werte LL unter der Voraussetzung, dass die Kanalzustandsinformation CSI vollkommen bekannt ist. Diese LL-Werte werden im Deinterleaver 19 entwürfelt und für eine Soft-Decision-Maximum-Likelihood(SDML)-Viterbi-Decodierung bzw. Turbodecodierung im Kanaldecodierer 20 benutzt.

Das Modell für das Kanalausbreitungsszenario ist ein Rayleigh-Schwundmodell mit 2 oder 12 Abgriffen Pfaden von gleichem Abstand mit einem exponentiellen Leistungsabfall von 1 dB von Abgriff Pfad zu AbgriffPfad und einer maximalen Verzögerungsspreizung von 60 bzw. 176 Abtastproben-Abtastwerten. Für die Simulationen wird ein DDD-Sender mit Sende/Empfangs-Frontends verwendet, wie sie in Fig.2 gezeigt sind. Die antennenspezifischen DopplerSpreizsignale werden so gewählt, dass die Dopplerspektren der einen Bestandteil bildenden Schwundkanäle symmetrisch in Bezug auf die Frequenz null verschoben werden und aneinander angrenzen. Es wird

$$\frac{f_{D_m}}{\Delta f_{sc}} = 2 \cdot \frac{f_{D_{max}}}{\Delta f_{sc}} \cdot \left(m - \frac{M-1}{2}\right), m = 0, \ldots, M-1 \qquad (6)$$

ausgewählt, wobei die normierte maximale Dopplerspreizung $\frac{f_{D_{max}}}{\Delta f_{sc}} = 0{,}05$ beträgt. Die Dopplerspreizung hängt von der Beweglichkeit der Umgebung oder der Beweglichkeit des Nutzers selber ab. Deshalb werden für die Simulation zwei zusätzliche Dopplerspreizungen $\frac{f_{D_{max}}}{\Delta f_{sc}} = 0{,}01$ und 0,10 gewählt. Eine Zusammenfassung der hauptsächlichen Simulationssystemparameter ist in Tabelle 1 gezeigt.

Tabelle 1

| | |
|---|---|
| FFT-Länge | $N_{FFT}$ = 1024 |
| OFDM-Rahmenlänge | 96 OFDM-Symbole |
| Pro OFDM-Symbol | 24 Datensymbole |
| Guard-Intervall-Länge | $N_{Guard}$ = 60/ bzw. 1760 Abtastprobenwerte |
| Modulation | 4-QAM |
| Codierung/Decodierung | (557,663,711)Faltungscode, Rate 1/3, SDML-Viterbi-Decodierung oder Turbo-Code (3GPP) |
| Kanal | 2-/ bzw. 12-Pfad KanalAbgriff, exponentieller Leistungsabfall, $\tau_{max}$ = 60 bzw. 176 Abtastprobenwerte |
| Kanal-Dopplerspreizung | $\frac{f_{D_{max}}}{\Delta f_{sc}} = 0{,}05$ Jakes-Spektralform |
| Anzahl der Sendeantennen | M = 1, 2, 3 |

Nachfolgend sind die Simulationsergebnisse angegeben.

Fig.6 bis Fig.9 zeigen die Bitfehlerrate (BER) der Simulation des Verfahrens nach der Erfindung im Vergleich zu einem kontinuierlichen Doppler-Diversity(DD)-Verfahren, das Gleichung (4) benutzt. Zur Bezugnahme ist die Bitfehlerrate (BER) eines Einsendeantennensystems eingezeichnet. Für das kontinuierliche Doppler-Diversity-System mit zwei Sendeantennen ist die Bitfehler-Leistungsfähigkeit nahezu gleich derjenigen des Einsendeantennensystems, was bedeutet, dass der Diversitätsgewinn infolge der zusätzlichen Dopplerspreizung durch den zusätzlichen ICI-Verlust aufgehoben wird. Wird die Anzahl der Sendeantennen auf ein Dreisendeantennensystem gesteigert, so wächst der ICI-Verlust weiter an, um das Gleichgewicht mit dem Diversitätsgewinn zu halten, d.h. die Bitfehlerrate (BER) wird nahezu gleich im Vergleich zum Einsendeantennen-Bezugssystem.

Für das durch die Erfindung vorgeschlagene DDD-System verbessert sich die Bitfehlerratenleistung mit einer anwachsenden Anzahl von Sendeantennen. Die ausnutzbare Zeitdiversität nimmt zu und die ICI bleibt gleich wie beim Einsendeantennen-Bezugssystem. Die Ergebnisse in Fig.6 zeigen eine Lücke von etwa 4 dB Verlust für die faltungscodierten 2-AbgriffPfad-Kanalsimulationsergebnisse im Vergleich zu den Ergebnissen für den statistisch unabhängigen Rayleigh Kanal (IR; Independent Rayleigh)-Ergebnissen. Die IR-Leistungsergebnisse beruhen auf der Annahme eines perfekten Interleaving, so dass die Gesamt-Kanalschwundkoeffizienten unkorreliert sind.

Bei der Simulationsausführung wird diese Annahme durch Erzeugung unabhängiger komplexwertiger, nach Gauß verteilter Freqüenzbereich-Schwundkoeffizienten mit Nullmitte Mittelwert Null und einer Varianz von 1/2 pro komplexer Dimension modelliert, d.h. die Simulationskette vom Interleaver zum Deinterleaver wird als ein Ersatz-IR-Schwundkanal betrachtet.

In Fig.7 wird der gleiche 2-AbgriffPfad-Rayleigh-Schwundkanal in Kombination mit einer Turbo-Kanalcodierung verwendet. Die Leistungsfähigkeit von Faltungs- und Turbocodierung ist ähnlich. Allerdings ist die Lücke für das turbocodierte 2-Abgriff-Kanalszenario zur IR-Kurve größer als 6 dB, da der Turbo-Codierer die Diversität, wenn verfügbar, noch weiter ausnutzen kann.

In Fig.8 sind die Ergebnisse für einen 12-AbgriffPfad-Rayleigh-Schwundkanal und Faltungscode dargestellt. Dieser Mehrwegekanal bietet mehr Frequenzdiversität als der 2-AbgriffPfad-Kanal. Deshalb sind die Verbesserungen lediglich etwa 2 dB für das faltungscodierte Szenario. Eine weitere Steigerung der Sendeantennenzahl verschiebt die Ergebnisse näher an die Leistungsfähigkeit der IR-Kanal-Grenze. Die Grenze liegt für drei Sendeantennen bei Verwendung des DDD-Sytems um etwa 1,5 dB weg.

Fig.9 zeigt den gleichen Simulationsaufbau mit Turbo-Kanalcodierung. Der Turbocodierer Turbocode kann die zusätzliche Diversität des Mehrwegs und von DDD im Vergleich zum DD-System ausnutzen, wird aber nicht - wie im DD-System - durch zusätzliche Interferenz beeinträchtigt. Es besteht jedoch noch ein Leistungsverlust von 3 dB gegenüber der IR-Kurve, welche die am besten ausnutzbare Diversität bietet. Diese Lücke von 3 dB könnte durch Zunahme der Sendeantennenzahl verkleinert werden, wobei weiterhin das DDD-System benutzt wird.

Grundsätzlich übertrifft das DDD-System sein Doppler-Diversity(DD)-Gegenstück ohne Erhöhung dermit geringerer Komplexität, da zusätzliche ICI nicht auftritt und keine Kompensationsmaßnahmen notwendig sind. Je höher die anfängliche Dopplerspreizung des Kanals ist, desto größer ist deshalb der Vorteil des DDD-Systems, was ICI angeht. Das Leistungsvermögen der beiden Systeme DD und DDD bleibt jedoch fast gleich, wenn ICI auf einem solchen Niveau ist, dass sie vernachlässigbar ist, d.h. für niedrige Dopplerspreizungen im Vergleich zum Unterträgerabstand.

Darüber hinaus vereinfacht das DDD-Schema den Systemaufbau, weil sich seine Bitfehlerraten(BER)-Leistungsfähigkeit mit einer zunehmenden Anzahl von Sendeantennen monoton verbessert, wogegen im Fall des kontinuierlichen Doppler-Diversity-Verfahrens ein Optimum gefunden werden musssich ab einer bestimmten Anzahl an Sendeantennen wieder eine Verschlechterung durch die überwiegende ICI einstellt. Ein Optimierungsproblem für die Fehlerrate bezüglich der Anzahl der Sendeantennen existiert deshalb nicht für DDD beim Systemdesign.

In Fig.10 wird die Dopplerspreizung mit einem festgelegten Satz Sendeantennen verändert. Die Bitfehlerraten (BER)-Leistungsfähigkeit ist für alle verschiedenen Dopplerspreizungen ganz ähnlich. Schon die Anfangsdopplerspreizung von 1% ist bereits zuverlässig, um durch das diskontinuierliche Dopplerdiversitätsschema DDD (Discontinuous Doppler Diversity) ausgenutzt zu werden. Der Kanalcode könnte die Diversität nicht erfolgreich weiter ausnutzen, da die mögliche Diversität in eine Sättigung konvergiert. Die fehlende Diversitätslücke gegenüber den IR(Independent Rayleigh)-Ergebnissen könnte durch Anwendung von Frequenzdiversitätssystemen, wie z.B. CDD, verkleinert werden.

Durch die Erfindung wird somit ein Verfahren zur Steigerung der Dopplerspreizung von Schwundkanälen vorgeschlagen, das zusätzliche Zeitselektivität und daher Diversität im Zeitbereich vorsieht. Das neue Schema beruht auf dem Gebrauch mehrerer Sendeantennen, wobei das Sendesignal mit einem sendeantennenspezifischen Signal multipliziert wird, was bewirkt, dass die Schwundprozesse des Kanals effektiv gespreizt werden. Darüber hinaus wird ICI in OFDM-Systemen infolge dieser gesteigerten Dopplerspreizung vermieden, indem die Spreizsignale für die Dauer einer OFDM-Symbolperiode konstant gehalten werden und das Signal nur zwischen aufeinanderfolgenden OFDM-Symbolen geändert wird. Dieses Verfahren verlangt keine Veränderungen am Empfänger, was es standardkompatibel macht.

Die vorliegende Erfindung ist von großem Interesse für die Informations- und Kommunikationsbranche und kann unter anderem die Übertragungsqualität und Kapazität bestehender Funksysteme wie auch zukünftiger Funksysteme verbessern. Von Bedeutung ist, dass das Verfahren nach der Erfindung auch so implementiert werden kann, dass es auch in Systemen nach bestehenden Standards eingesetzt werden kann, ohne dass eine Modifikation der Standards erforderlich ist.

Des weiteren kann die Erfindung in allen Systemen vorteilhaft sein, die bislang aus einem gewissen Grad an zeitlicher Selektivität Nutzen gezogen haben, wobei dieser Nutzen aufgrund des Verlustes an Signalenergie und der Störung der Nachbarsignale bislang nur beschränkt verwertbar war. Dies könnte auch funklose Übertragungsmedien wie Glasfaser mit einschlie-ßen, die anhand der zusätzlichen zeitlichen Selektivität ihre vorhandenen Dispersionseffekte gezielter nutzen können, um diese auszunutzen, beispielsweise mit einer geeigneten Kanalcodierung.

Des weiteren lässt sich die zeitliche Selektivität auch vorteilhaft in ein MC-CDMA System integrieren.

Bezugszeichenliste

| | |
|---|---|
| 1 | OFDM-Modulator |
| 2 | Leistungsverteilglied |
| 3 | Zeitverzögerungsglied |
| 4 | Glied zur Einführung einer zyklischen Erweiterung |
| 5 | Sendeantennen |
| 6 | Funkübertragungsweg |
| 7 | Empfangsantenne |
| 8 | Einrichtung zum Entfernen der zyklischen Erweiterung |
| 9 | OFDM-Demodulator |
| 10 | Erweiterungsglied |
| 11 | Multiplizierglied |
| 12 | Quelle |
| 13 | Kanalcodierer |
| 14 | Interleaver |
| 15 | Modulator |
| 16 | Seriell-Parallel-Wandler |
| 17 | Parallel-Seriell-Wandler |
| 18 | Demodulator |
| 19 | Deinterleaver |
| 20 | Kanaldecodierer |
| 21 | Senke |

**Patentansprüche**

**1.** Verfahren zur Übertragung digitaler Nachrichtensignale von einem mehrere Signalaussendeeinrichtungen (5) oder Signalaussendeeinrichtungsgruppen, wie z.B. Antennen oder Antennengruppen, aufweisenden Sender zu einem Empfänger eines Übertragungssystems, z.B. eines Funkübertragungssystems, über ein Übertragungsmedium(6), das am Empfänger zu einer Varianz der Leistung der Signale in der Zeit und damit zu nicht fehlerfreier Übertragung führen kann, unter Verwendung einer Zeitdiversitätsmaßnahme, gemäß welcher die digitalen Nachrichtensignale für die Signalaussendeeinrichtungen bzw. Signalaussendeeinrichtungsgruppen mit unterschiedlichen Dopplerspreizsignalen multipliziert werden, **dadurch gekennzeichnet, dass** die unterschiedlichen Dopplerspreizsignale ($\gamma'(k)$), mit denen die digitalen Nachrichtensignale für die verschiedenen Signalaussendeeinrichtungen (5) bzw. Signalaussendeeinrichtungsgruppen multipliziert werden, während eines Symbols konstant sind und nur in Symbolintervallen aktualisiert werden, so dass die auszusendenden digitalen Nachrichtensignale für die verschiedenen Signalaussendeeinrichtungen bzw. Signalaussendeeinrichtungsgruppen durch die stufenförmigen und daher diskontinuierlichen Dopplerspreizsignale ($\gamma''(k)$) diskontinuierlich verschieden modifiziert und somit spektral gespreizt ausgesendet werden und der Empfänger in der Lage ist, das digitale Nachrichtensignal auf Grund der zusätzlichen Diversität korrekt zu detektieren.

**2.** Verfahren nach Anspruch 1, **gekennzeichnet durch** eine Kanalcodierung (13) der auszusendenden digitalen Nachrichtensignale, die geeignet ist, Übertragungsfehler zu korrigieren.

**3.** Verfahren nach Anspruch 1, **gekennzeichnet durch** ein ARQ (Automatic Repeat Request)-Verfahren, wie das Verfahren der inkrementellen Redundanz oder Chase-Combining, das in der Lage ist, die zusätzliche Diversität zur Korrektur von Übertragungsfehlern zu nutzen.

4. Verfahren nach Anspruch 1, **gekennzeichnet durch** Multi-Carrier-Code-Division-Multiplexing, das keine Ratenverluste aufweist und **durch** geeignete Ausnutzung von Zeit- und/oder Frequenzdiversität die Übertragungsqualität verbessert.

5. Verfahren nach einem der vorhergehenden Ansprüche, **dadurch gekennzeichnet, dass** die Signaldaten im Sender mit einem Interleaver (14) verwürfelt und im Empfänger mit einem entsprechenden Deinterleaver (19) entwürfelt werden.

6. Verfahren nach einem der vorhergehenden Ansprüche, **dadurch gekennzeichnet, dass** Sender und Empfänger nach dem Prinzip der Einträgerübertragung arbeiten.

7. Verfahren nach einem der Ansprüche 1 bis 5, **dadurch gekennzeichnet, dass** Sender und Empfänger nach dem Prinzip der Mehrträgerübertragung arbeiten.

8. Verfahren nach Anspruch 7, **dadurch gekennzeichnet, dass** Sender und Empfänger nach dem Prinzip der OFDM-Übertragung arbeiten.

9. Verfahren nach Anspruch 5 und 8, **dadurch gekennzeichnet, dass** die Signaldaten im Sender durch Zeit- und Frequenzinterleaving (14) verwürfelt und im Empfänger mit einem entsprechenden Deinterleaving(19) entwürfelt werden.

10. Verfahren nach Anspruch 8 oder 9, **gekennzeichnet durch** eine Verknüpfung mit dem sogenannten Cyclic-Delay-Diversity-Verfahren.

11. Verfahren nach einem der vorhergehenden Ansprüche, **dadurch gekennzeichnet, dass** die digitalen Nachrichtensignale vom Sender über eine oder mehrere intelligente Antennengruppen ausgesendet werden, die so gesteuert werden, dass sie gezielt den Empfänger durch die topographischen Gegebenheiten des Kanals ansprechen.

12. Verfahren nach einem der vorhergehenden Ansprüche, **dadurch gekennzeichnet, dass** die einzelnen Sendekeulen mit Space-Time-Codierung geeignet kombiniert werden, bei der Redundanz nicht nur in Zeit- und/oder Frequenzrichtung in den digitalen Nachrichtensignalstrom eingefügt wird, sondern auch in "Raumrichtung", dass dabei von den isotropen Sendeantennen verschiedene Signale abgestrahlt werden, die sich am Empfänger überlagern, und dass empfangsseitig ein geeigneter Decoder zur Verfügung gestellt wird.

13. Verfahren nach Anspruch 12, **dadurch gekennzeichnet, dass** die Flexibilität der Space-Time-Codierung durch Sende- und Empfangsantennen mit mehreren Keulen, die paarweise aufeinander adaptiert werden, gesteigert wird, wodurch getrennte Ausbreitungskanäle realisiert werden, welche die Signalüberlagerung am Empfänger verhindern und sowohl eine gezielte Verteilung der Information am Sender als auch eine Verarbeitung der empfangenen Signale und nicht nur deren Überlagerung an den einzelnen Keulen zulassen.

14. Verfahren nach einem der vorhergehenden Ansprüche, **dadurch gekennzeichnet, dass** in einem zellularen Netz eines Mobilfunksystems ein mobiler Empfänger seine digitalen Nachrichtensignale nicht nur von einer Basisstation erhält, sondern mehrere Keulen unterschiedlicher Basisstationen dem Empfänger eines Mobilfunkgeräts durch diskontinuierliche Dopplerspreizsignale verschieden modifizierte digitale Nachrichtensignale senden.

15. Verfahren nach einem der vorhergehenden Ansprüche, **dadurch gekennzeichnet, dass** in einem zellularen Netz eines Mobilfunksystems den Mobilfunkgeräten mehrere Keulen zum Senden zur Verfügung stehen und dass diese ihre digitalen Nachrichtensignale nicht nur an eine, sondern an mehrere Basisstationen durch diskontinuierliche Dopplerspreizsignale verschieden modifiziert senden.

16. Verfahren nach den Ansprüchen 14 und 15, **dadurch gekennzeichnet, dass** die Aussendung der verschieden modifizierten Keulen von den Sendern der einzelnen Basisstationen bzw. von den Sendern der einzelnen Mobilfunkgeräte bei der Zellplanung in Mobilfunksystemen berücksichtigt wird.

17. Verfahren nach einem der vorhergehenden Ansprüche, **dadurch gekennzeichnet, dass** in einem digitalen Kommunikationssystem ein Empfänger digitale Nachrichtensignale nicht nur von einem Sender erhält, sondern über mehrere Kommunikationspfade unterschiedlicher Sendestationen dem Empfänger durch diskontinuierliche Dopplerspreizsignale verschieden modifizierte digitale Nachrichtensignale zugesendet werden.

**18.** Verfahren nach einem der vorhergehenden Ansprüche, **dadurch gekennzeichnet, dass** die Modifikation der digitalen Nachrichtensignale auch am Empfänger mit mehreren Signalempfangseinrichtungen bzw. Signalempfangseinrichtungsgruppen durchführbar ist.

**19.** Verfahren nach einem der Ansprüche 1 bis J.7, **dadurch gekennzeichnet, dass** die Modifikation der digitalen Nachrichtensignale am Sender mit mehreren Signalsendeeinrichtungen bzw. Signalsendeeinrichtungsgruppen und am Empfänger mit mehreren Signalempfangseinrichtungen bzw. Signalempfangseinrichtungsgruppen durchführbar ist.

## Claims

**1.** A method for transmission of digital information signals from a transmitter comprising a plurality of signal transmission devices (5) or arrays of signal transmission devices such as e.g. antennae or arrays of antennae, to a receiver of a transmission system, e.g. a radio transmission system, via a transmission medium (6) which on the side of the receiver may cause a variance of the performance of the signals over time and thus an imperfect transmission, by use of a time diversity measure according to which the digital information signals are multiplied by different Doppler spread signals for the signal transmission devices and arrays of signal transmission devices, respectively, **characterized in that** the different Doppler spread signals ($\gamma''(k)$) by which the digital information signals for the various signal transmission devices (5) and arrays of signal transmission devices, respectively, are multiplied, are constant during a symbol and are updated only in symbol intervals so that the digital information signals to be transmitted are in a discontinuously different manner modified by the step-shaped and thus discontinuous Doppler spread signals ($\gamma''(k)$) for the various signal transmission devices (5) and arrays of signal transmission devices, respectively, and thus are transmitted as spectrally spread signals, and the receiver is capable of correctly detecting the digital information signal due to the additional diversity.

**2.** The method according to claim 1, **characterized by** a channel coding (13) performed on the digital information signals to be transmitted, said channel coding being adapted to correct transmission errors.

**3.** The method according to claim 1, **characterized by** an ARQ (Automatic Repeat Request) method, such e.g. as the method of incremental redundancy or chase combining, which is adapted to utilize the additional diversity for correction of transmission errors.

**4.** The method according to claim 1, **characterized by** multi-carrier code division multiplexing which does not have rate losses and improves the transmission quality by suitable utilization of time and/or frequency diversity.

**5.** The method according to any one of the previous claims, **characterized in that**, in the transmitter, the signal data are scrambled by an interleaver (14) and in the receiver are descrambled by a corresponding deinterleaver (19).

**6.** The method according to any one of the previous claims, **characterized in that** the transmitter and the receiver are operative according to the principle of one-carrier transmission.

**7.** The method according to any one of claims 1 to 5, **characterized in that** the transmitter and the receiver are operative according to the principle of multi-carrier transmission.

**8.** The method according to claim 7, **characterized in that** the transmitter and the receiver are operative according to the principle of OFDM transmission.

**9.** The method according to claims 5 and 8, **characterized in that**, in the transmitter, the signal data are scrambled by time and frequency interleaving (14) and in the receiver are descrambled by corresponding deinterleaving (19).

**10.** The method according to claim 8 or 9, **characterized by** linking to the so-called cyclic delay diversity method.

**11.** The method according to any one of the previous claims, **characterized in that** the digital information signals are transmitted by the transmitter via one or a plurality of intelligent arrays of antennae which are controlled to address specifically the receiver by means of the topographic conditions of the channel.

**12.** The method according to any one of the previous claims, **characterized in that** the individual transmission lobes are suitably combined with space-time coding wherein a redundancy is introduced into the flow of digital information signals not only in the time and/or frequency direction but also in the "space direction" and that, in the process, the isotropic transmission antenna are caused to emit different signals which will overlap each other at the receiver, and that a suitable decoder is made available on the receiver side.

**13.** The method according to claim 12, **characterized in that** the flexibility of the space-time coding is increased by use of transmitter and receiver antennae having a plurality of lobes adapted to each other in pairs, whereby separated spread channels are realized which prevent the signal superposition at the receiver and allow both for a well-aimed distribution of the information at the transmitter and for a processing of the received signals and not only for their mutual superposition at the individual lobes.

**14.** The method according to any one of the previous claims, **characterized in that**, in a cellular network of a mobile radio system, a mobile receiver receives its digital information signals not only from one base station but that a plurality of lobes of different base stations transmit, to the receiver of a mobile radio device, digital information signals which have been differently modified by discontinuous Doppler spread signals.

**15.** The method according to any one of the previous claims, **characterized in that**, in a cellular network of a mobile radio system, a plurality of lobes are available to the mobile radio devices for transmission, and that the mobile radio devices transmit their digital information signals not to one but to a plurality of base stations, the signals being differently modified by discontinuous Doppler spread signals.

**16.** The method according to claims 14 and 15, **characterized in that** the transmission of the differently modified lobes from the transmitters of the individual base stations and from the transmitters of the individual mobile radio devices, respectively, is considered in the planning of cells in mobile radio systems.

**17.** The method according to any one of the previous claims, **characterized in that**, in a digital communication system, a receiver receives digital information signals not only from one transmitter but that, via a plurality of communication paths of different transmitter stations, information signals are transmitted to the receiver which have been differently modified by discontinuous Doppler spread signals.

**18.** The method according to any one of the previous claims, **characterized in that** the modification of the digital information signals can be performed also on the side of the receiver by use of a plurality of signal receiver devices and arrays of signal receiver devices, respectively.

**19.** The method according to any one of claims 1 to 17, **characterized in that** the modification of the digital information signals can be performed on the side of the transmitter by use of a plurality of signal transmission devices and arrays of signal transmission devices, respectively, and on the side of the receiver by use of a plurality of signal receiver devices and arrays of signal receiver devices, respectively.

## Revendications

**1.** Procédé pour la transmission de signaux d'information numériques depuis un émetteur présentant plusieurs dispositifs d'émission de signaux (5) ou groupes de dispositifs d'émission de signaux comme, par exemple, des antennes ou groupes d'antennes, vers un récepteur d'un système de transmission, par exemple d'un système de radiotransmission, par l'intermédiaire d'un média de transmission (6) qui peut entraîner, sur le récepteur, une variation de la puissance des signaux dans le temps et ainsi une transmission sans erreurs, en utilisant une solution de diversité de temps selon laquelle les signaux d'information numériques sont multipliés par différents signaux d'étalement doppler pour les dispositifs d'émission de signaux ou respectivement les groupes de dispositifs d'émission de signaux,
**caractérisé en ce que**
les différents signaux d'étalement doppler ($y''(k)$), par lesquels les signaux d'information numériques sont multipliés pour les différents dispositifs d'émission de signaux (5) ou respectivement les groupes de dispositifs d'émission de signaux, sont constants pendant un symbole et ne sont actualisés que pendant les intervalles entre les symboles, de sorte que les signaux d'information numériques à émettre sont différemment modifiés de manière discontinue, pour les différents dispositifs d'émission de signaux respectivement groupes de dispositifs d'émission de signaux, par les signaux d'étalement doppler ($\gamma''(k)$) étagés et par conséquent discontinus et ainsi émis de manière spectralement étalée et le récepteur est en mesure de détecter correctement le signal d'information numérique sur la base de la diversité supplémentaire.

2. Procédé selon la revendication 1,
**caractérisé par**
un codage de canal (13) des signaux d'information numériques à émettre propre à corriger les erreurs de transmission.

3. Procédé selon la revendication 1,
**caractérisé par**
un procédé ARQ (Automatic Repeat resquest) comme le procédé de la redondance incrémentale ou le Chase-Combining, lequel est en mesure d'utiliser la diversité supplémentaire pour corriger des erreurs de transmission.

4. Procédé selon la revendication 1,
**caractérisé par**
un multiplexage Multi-Carrier-Code-Division-Multiplexing qui ne présente aucune perte de débit et qui améliore la qualité de transmission grâce une exploitation appropriée de la diversité de temps et/ou de fréquence.

5. Procédé selon l'une quelconque des revendications précédentes,
**caractérisé en ce que**
les données de signal sont encodées, dans l'émetteur, avec un entrelaceur (14) et désencodées, dans le récepteur, avec un désentrelaceur (19) correspondant.

6. Procédé selon l'une quelconque des revendications précédentes,
**caractérisé en ce que**
l'émetteur et le récepteur travaillent selon le principe de la transmission par monoporteuse.

7. Procédé selon l'une quelconque des revendications 1 à 5,
**caractérisé en ce que**
l'émetteur et le récepteur travaillent selon le principe de la transmission par multiporteuse.

8. Procédé selon la revendication 7,
**caractérisé en ce que**
l'émetteur et le récepteur travaillent selon le principe de la transmission OFDM.

9. Procédé selon la revendication 5 ou la revendication 8,
**caractérisé en ce que**
les données de signalisation, dans l'émetteur, sont encodées par entrelacement du temps et de la fréquence (14) et, dans le récepteur, désencodées avec un désentrelaceur (19) correspondant.

10. Procédé selon la revendication 8 ou la revendication 9,
**caractérisé par**
une enchaînement avec le procédé dit Cyclic-Delay-Diversity.

11. Procédé selon l'une quelconque des revendications précédentes,
**caractérisé en ce que**
les signaux d'information numériques sont émis par l'émetteur par un ou plusieurs groupes d'antennes intelligents qui sont commandés de façon à exciter de manière ciblée le récepteur grâce aux données topographiques du canal.

12. Procédé selon l'une quelconque des revendications précédentes,
**caractérisé en ce que**
les différents lobes de rayonnement sont combinés, de manière appropriée, à un codage espace-temps lors duquel la redondance n'est pas insérée seulement dans le sens du temps et/ou de la fréquence dans le flux de signaux d'information numériques mais aussi dans le "sens spatial", différents signaux, qui se superposent sur le récepteur, sont alors rayonnés par les antennes émettrices isotopes et un décodeur approprié est mis à disposition côté réception.

13. Procédé selon la revendication 12,
**caractérisé en ce que**

la flexibilité du codage espace-temps est augmentée par des antennes émettrices et réceptrices comportant plusieurs lobes adaptés l'un à l'autre par paires, moyennant quoi des canaux de propagation séparés sont réalisés qui empêchent la superposition de signaux sur le récepteur et permettent aussi bien une répartition ciblée de l'information sur l'émetteur qu'un traitement des signaux reçus et pas seulement leur superposition sur les différents lobes.

**14.** Procédé selon l'une quelconque des revendications précédentes,
**caractérisé en ce que**
dans un réseau cellulaire d'un système de téléphonie mobile, un récepteur mobile reçoit ses signaux d'information numériques non seulement d'une station de base, mais aussi de plusieurs lobes de différentes stations de base envoyant au récepteur d'un appareil de téléphonie mobile des signaux d'information numériques différemment modifiés par des signaux d'étalement doppler discontinus.

**15.** Procédé selon l'une quelconque des revendications précédentes,
**caractérisé en ce que**,
dans un réseau cellulaire d'un système de téléphonie mobile, on met à disposition des appareils de téléphonie mobile plusieurs lobes d'émission et que ceux-ci envoient leur signaux d'information numériques différemment modifiés non seulement à une, mais aussi à plusieurs stations de base par des signaux d'étalement doppler discontinus.

**16.** Procédé selon la revendication 14 et 15,
**caractérisé en ce que**
l'émission des lobes différemment modifiés est prise en compte par les émetteurs des différentes stations de base ou les émetteurs des appareils de téléphonie mobile lors de la planification cellulaire dans les systèmes de téléphonie mobile.

**17.** Procédé selon l'une quelconque des revendications précédentes,
**caractérisé en ce que**,
dans un système de communication numérique, un récepteur reçoit non seulement des signaux numériques d'information, mais aussi des signaux numériques d'information différemment modifiés sont envoyés au récepteur, par l'intermédiaire de plusieurs chemins de communication de différentes stations d'émission, par des signaux d'étalement doppler discontinus.

**18.** Procédé selon l'une quelconque des revendications précédentes,
**caractérisé en ce que**
la modification des signaux numériques d'information peut être exécutée également sur le récepteur comportant plusieurs dispositifs de réception du signal ou groupes de dispositifs de réception de signal.

**19.** Procédé selon l'une des revendications 1 à 17,
**caractérisé en ce que**
la modification des signaux numériques d'information peut être exécutée sur l'émetteur comportant plusieurs dispositifs d'émission du signal ou groupes de dispositifs d'émission de signal et sur le récepteur comportant plusieurs dispositifs de réception du signal ou groupes de dispositifs de réception de signal.

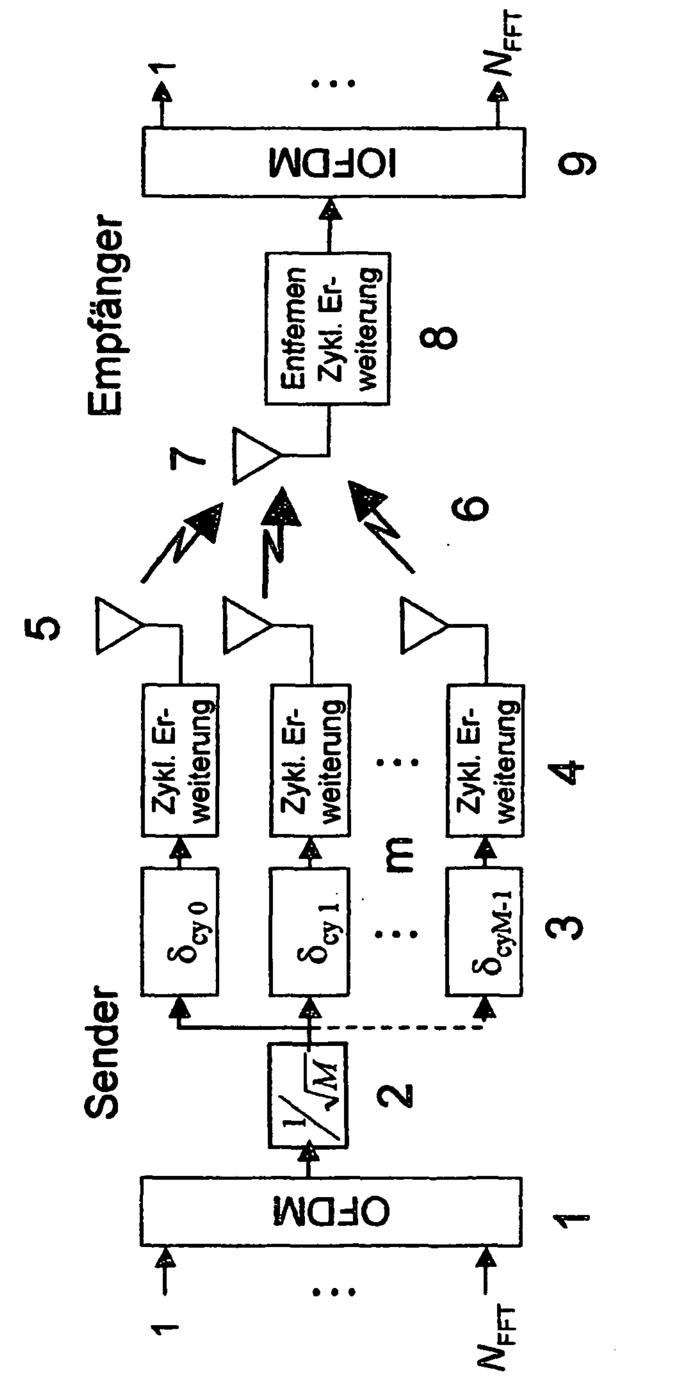
Sender
Empfänger
OFDM
1
$1/\sqrt{M}$
2
$\delta_{cy\,0}$
$\delta_{cy\,1}$
$\delta_{cyM-1}$
3
Zykl. Erweiterung
4
5
6
7
Entfernen Zykl. Erweiterung
8
IOFDM
9
m
1
$N_{FFT}$

Fig.1

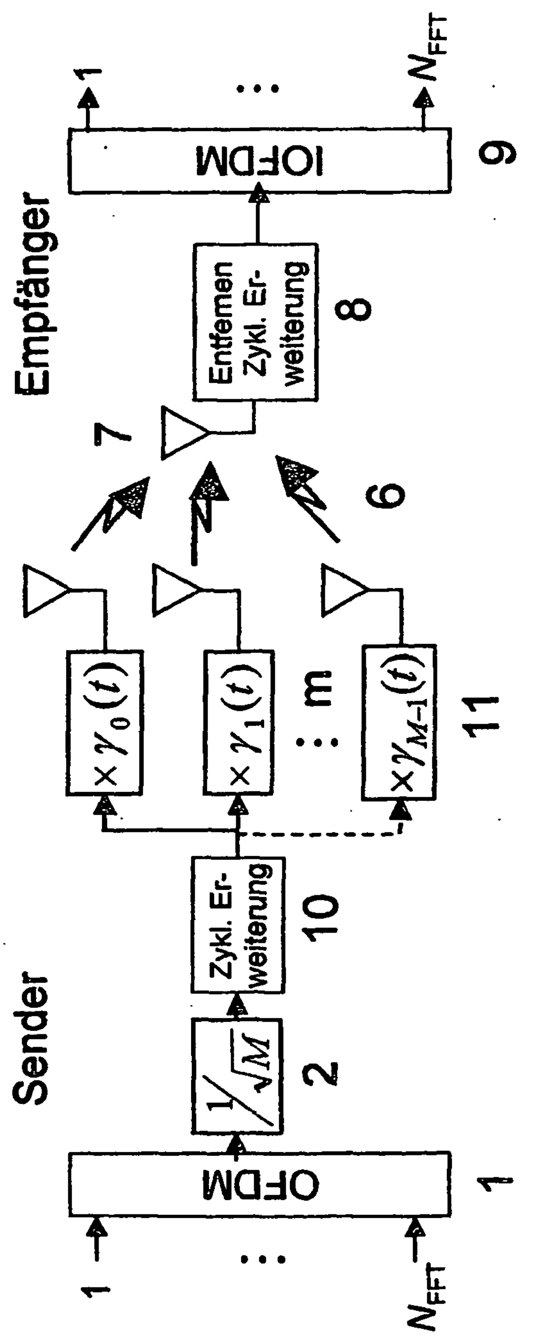
Sender
Empfänger
OFDM
IOFDM
$1/\sqrt{M}$
Zykl. Er-weiterung
Entfernen Zykl. Er-weiterung
$\times\gamma_0(t)$
$\times\gamma_1(t)$
$\times\gamma_{M-1}(t)$
m
1
$N_{FFT}$
1
2
5
6
7
8
9
10
11

Fig.2

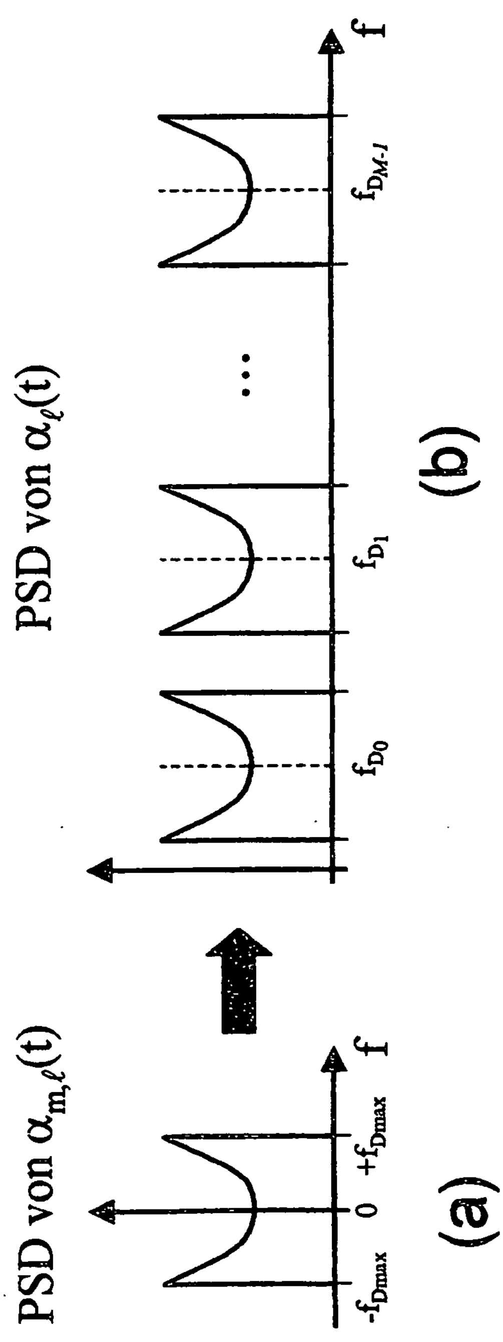
PSD von $\alpha_{m,\ell}(t)$
$-f_{Dmax}$
0
$+f_{Dmax}$
f
(a)
PSD von $\alpha_{\ell}(t)$
$f_{D0}$
$f_{D1}$
...
$f_{DM-1}$
f
(b)

Fig.3

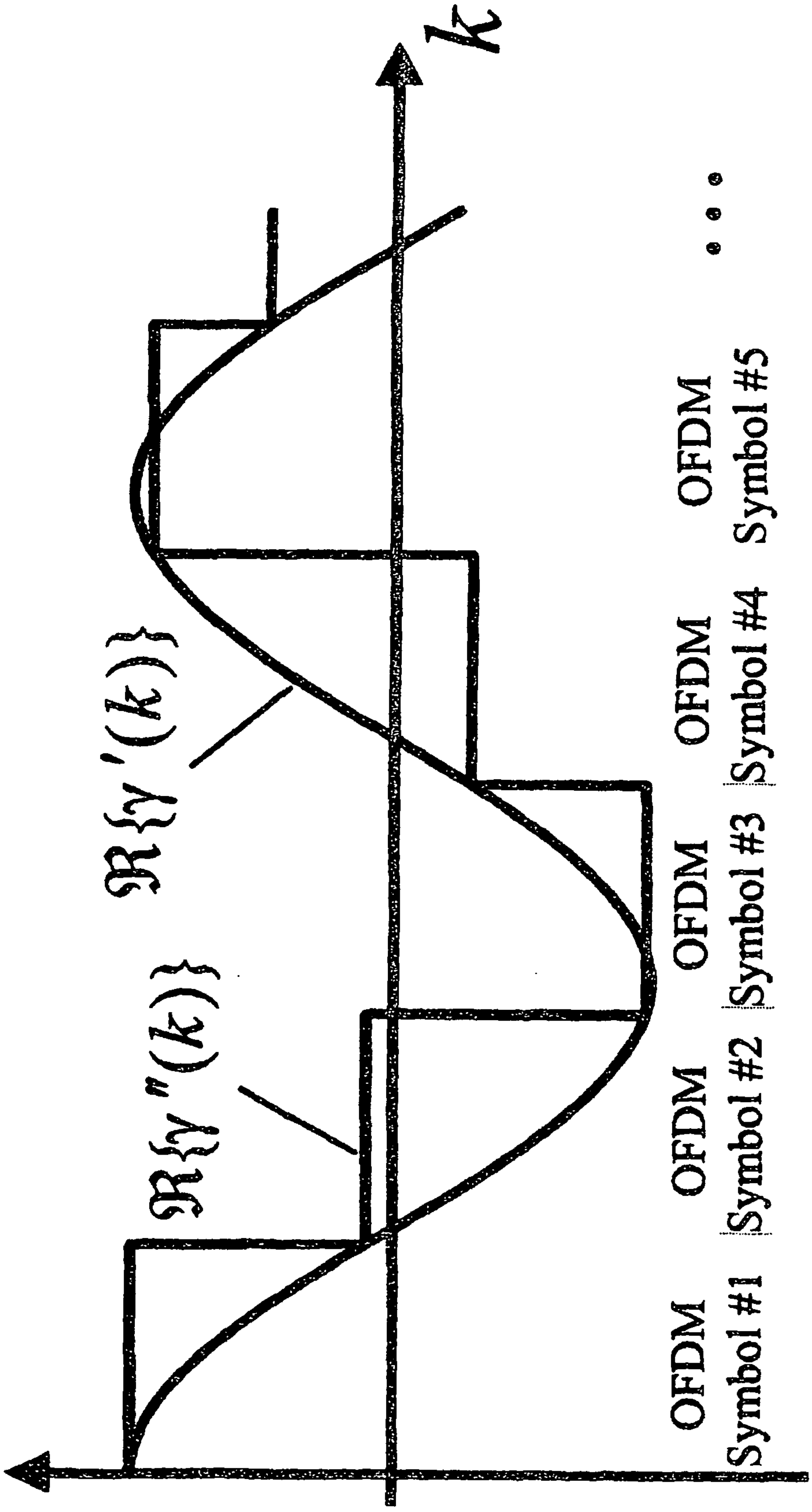
k
ℜ{γ'(k)}
ℜ{γ''(k)}
OFDM Symbol #1
OFDM Symbol #2
OFDM Symbol #3
OFDM Symbol #4
OFDM Symbol #5
• • •

Fig.4

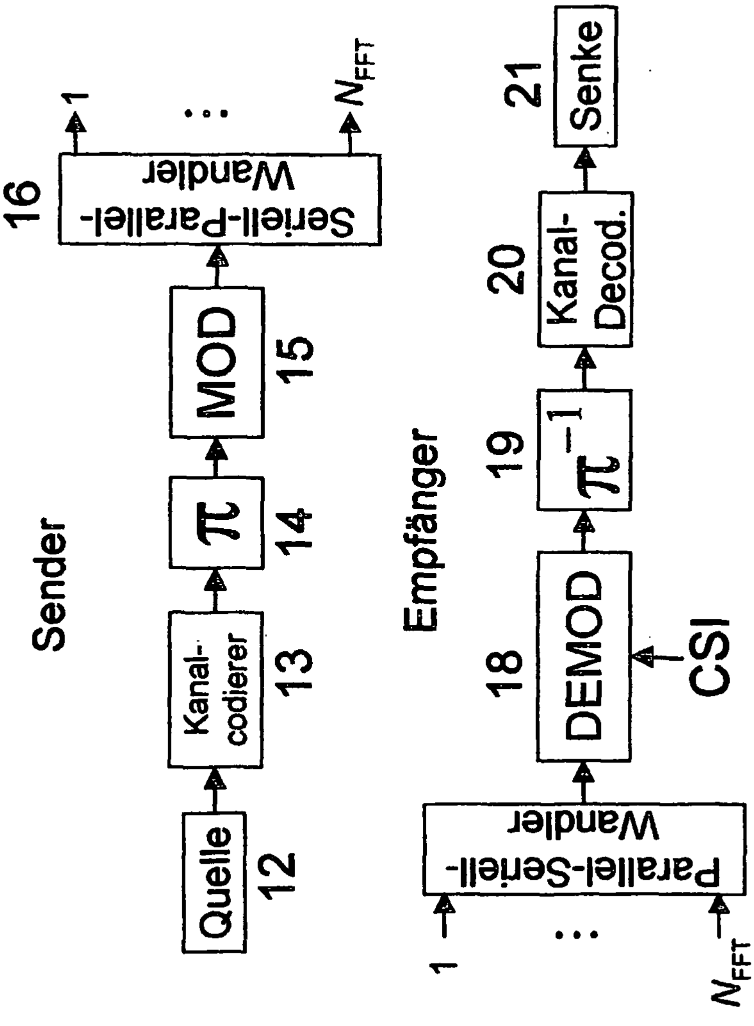
Sender
Quelle
12
Kanal-
codierer
13
π
14
MOD
15
Seriell-Parallel-
Wandler
16
1
...
$N_{FFT}$
Empfänger
Parallel-Seriell-
Wandler
17
DEMOD
18
CSI
$π^{-1}$
19
Kanal-
Decod.
20
Senke
21

Fig.5

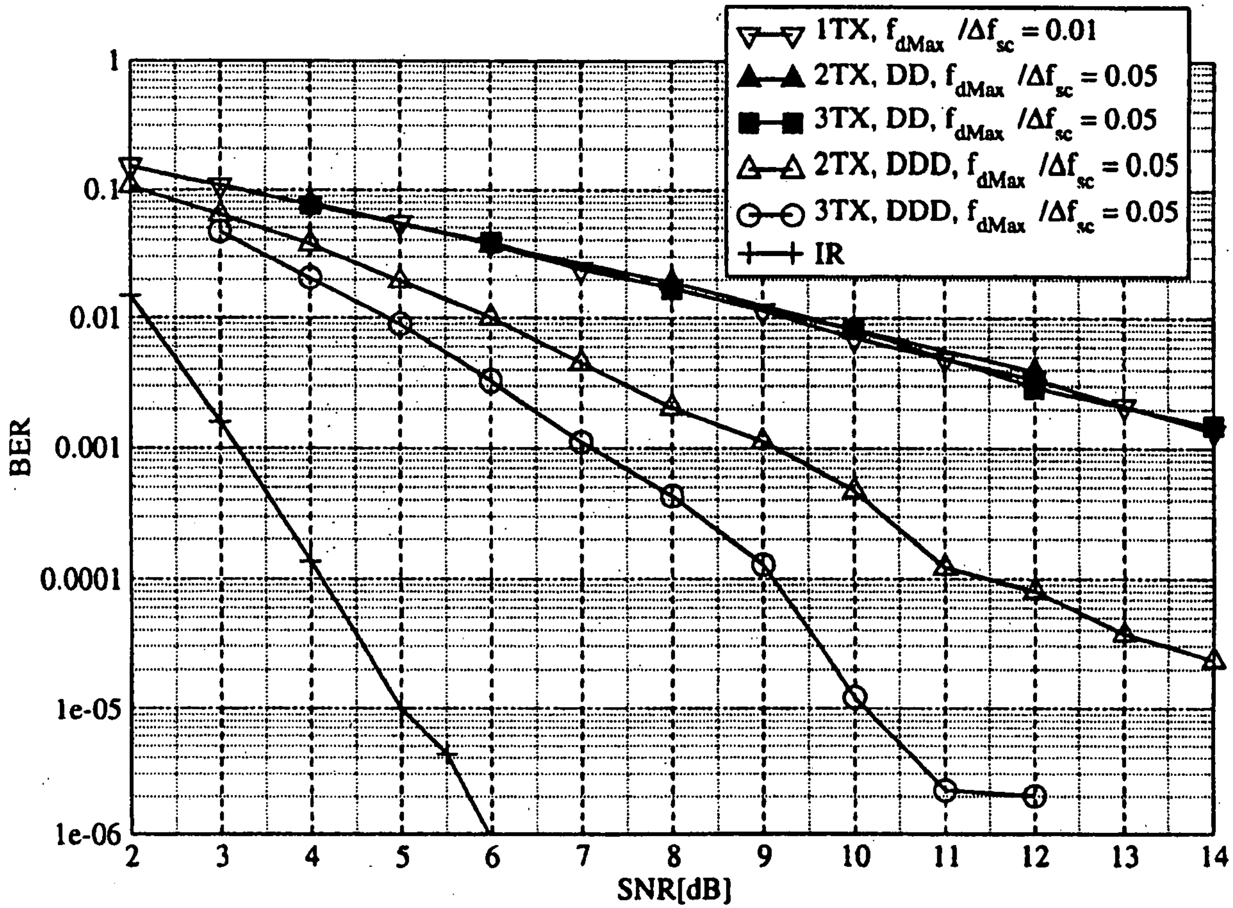


Fig.6

Simulationsergebnisse für Dopplerdiversität mit und ohne ICI bei Faltungscodierung für 2-Abgriff-Rayleigh-Schwundkanal

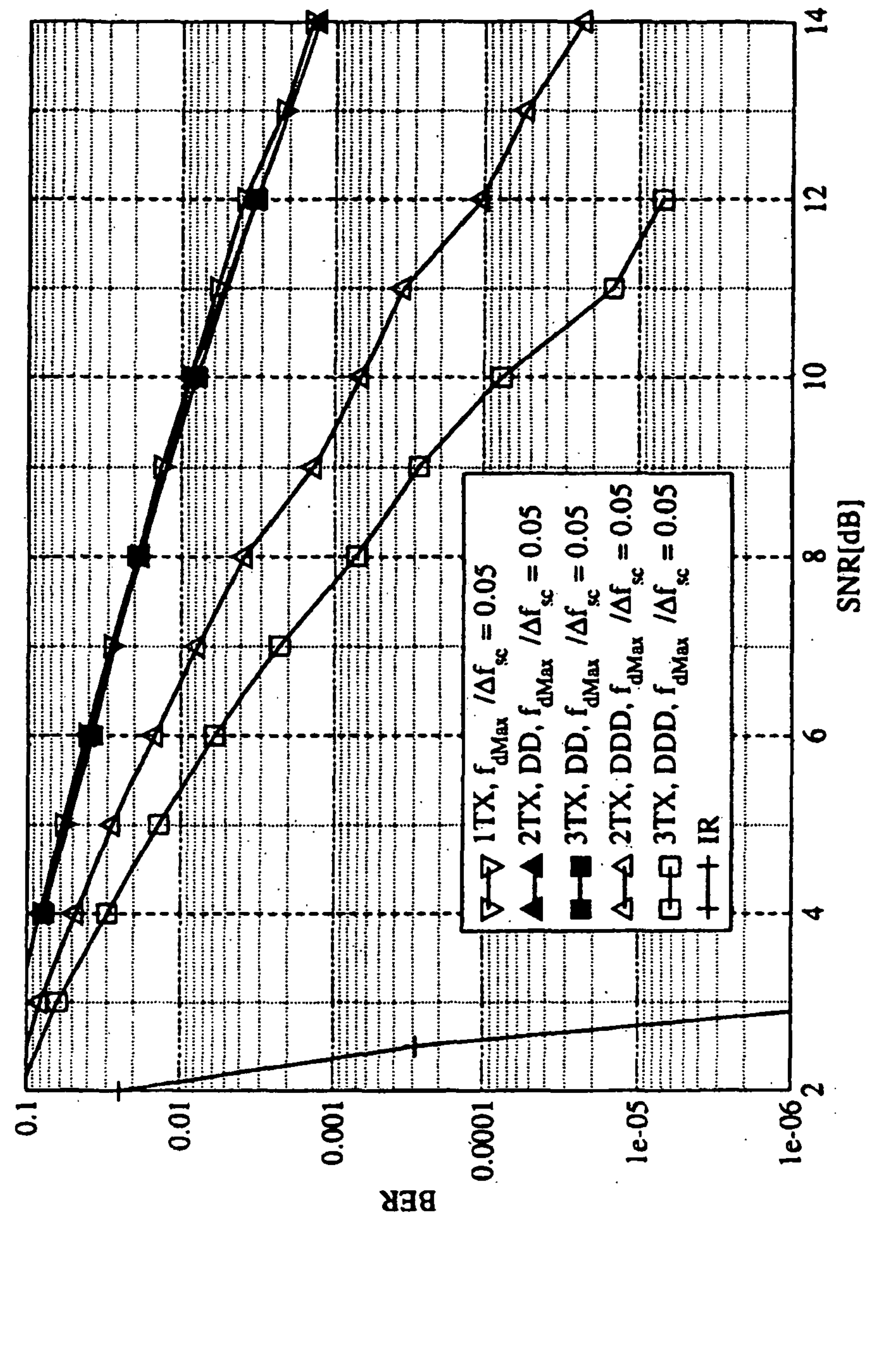


Simulationsergebnisse für Dopplerdiversität mit und ohne ICI bei Turbocodierung für 2-Abgriff-Rayleigh-Schwundkanal

Fig.7

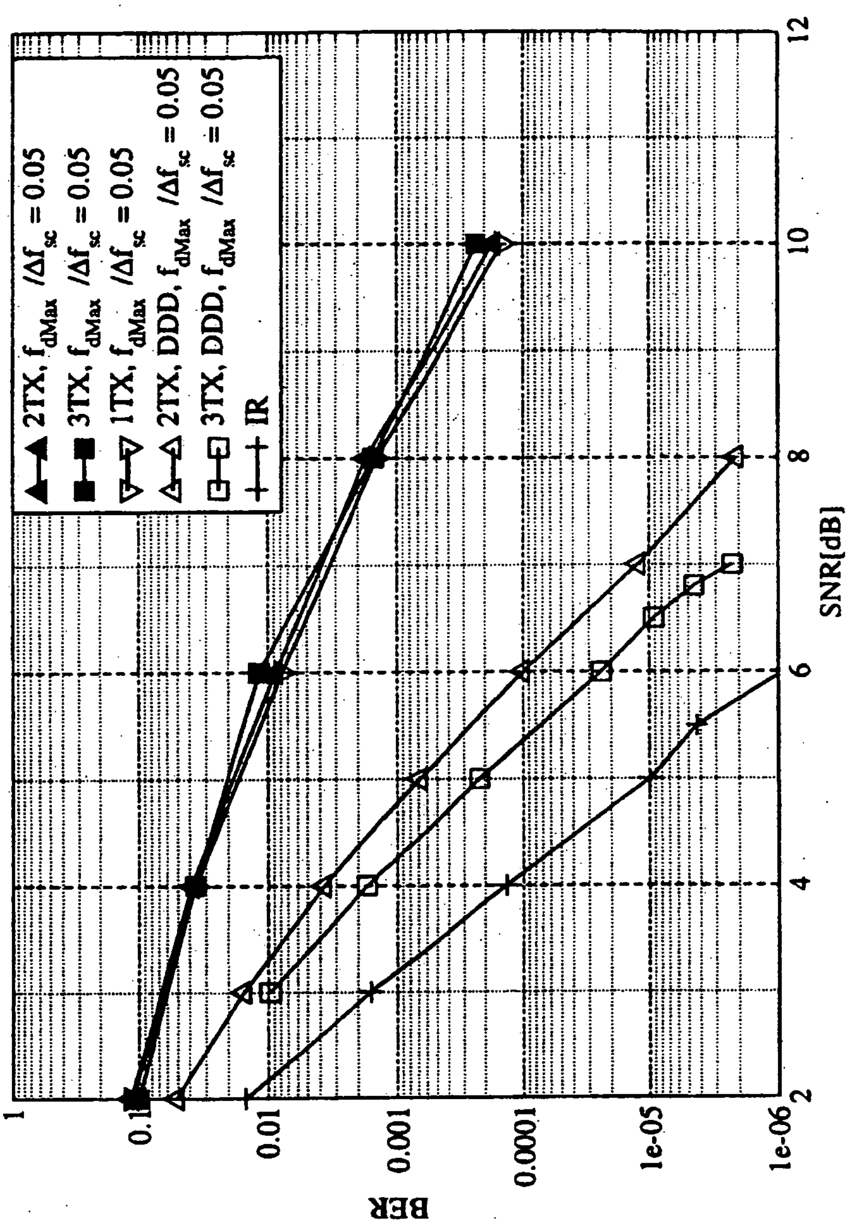


Simulationsergebnisse für Dopplerdiversität mit und ohne ICI bei Faltungscodierung für 12-Abgriff-Rayleigh-Schwundkanal

Fig.8

Fig.9

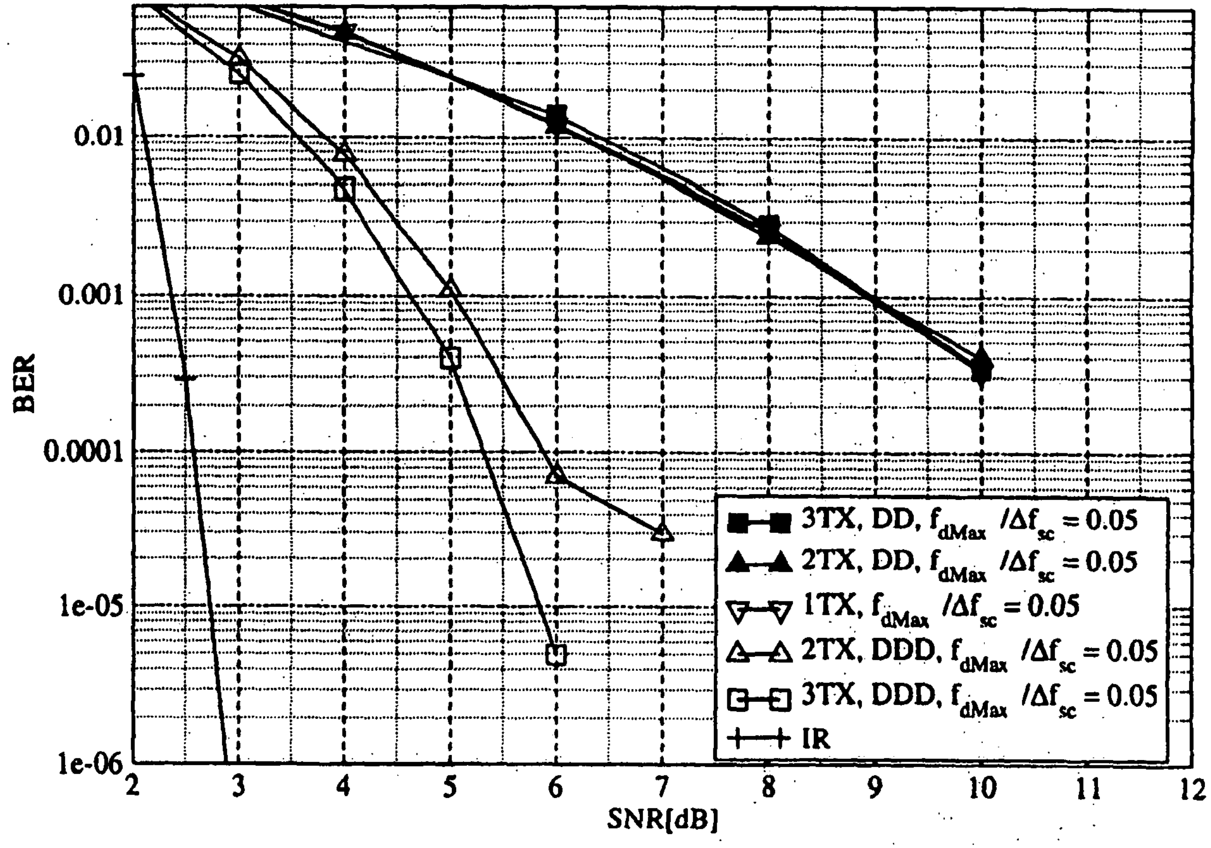


Simulationsergebnisse für Dopplerdiversität mit und ohne ICI bei Turbocodierung für 12-Abgriff-Rayleigh-Schwundkanal

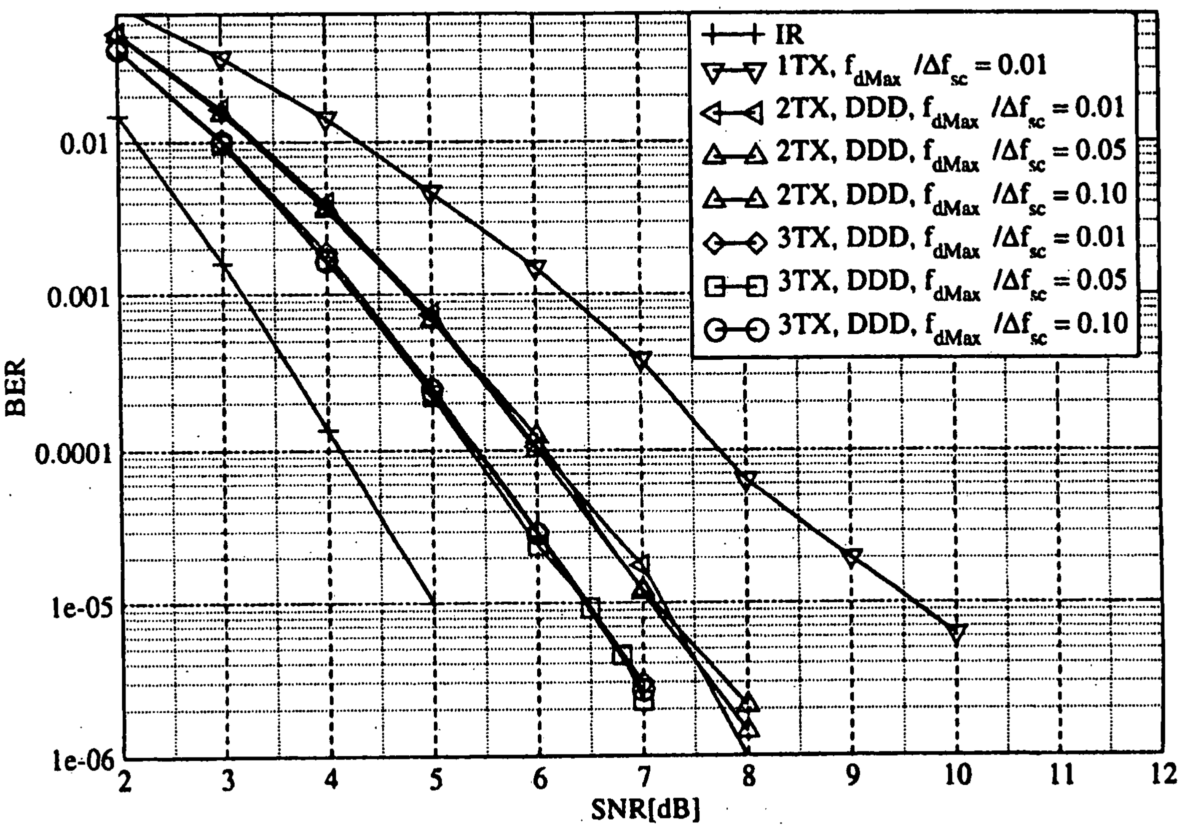


Fig.10

Simulationsergebnisse für variable Dopplerspreizungen
bei Faltungscodierung für 12-Abgriff-Rayleigh-Schwundkanal

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **J. G. PROAKIS.** Digital Communications. McGraw-Hill, 1995
- **R. VAN NEE ; R. PRASAD.** OFDM for Wireless Multimedia Communications. Artech House Publishers, 2000
- **J. G. PROAKIS ; S. KAISER.** Spatial transmit diversity techniques for broadband OFDM systems. *Proc. IEEE Global Telecommun. Conf.,* 1824-1828
- **V. TAROKH ; N. SESHADRI ; A. R. CALDERBANK.** Space-Time Codes for High Data Rate Wireless Communication: Performance Criterion and Code Construction. *IEEE Transactions on Information Theory,* Marz 1998, vol. 44 (2), 744-764
- **S. M. ALAMOUTI.** A simple transmit diversity technique for wireless communications. *IEEE Journal on Selected Areas in Communications,* Oktober 1998, vol. 16 (8), 1451-1458
- **L. C. GODARA.** Applications of Antenna Arrays to Mobile Communications, Part I: Performance Improvement, Feasibility, and System Considerations. *Proceedings of the IEEE,* vol. 85 (7), 1031-1060
- **L. C. GODARA.** Applications of Antenna Arrays to Mobile Communications, Part II: Beam-Forming and Direction-of-Arrival Considerations. *Proceedings of the IEEE,* vol. 85 (8), 1195-1245
- **R. RAULEFS ; A. DAMMANN ; S. KAISER ; G. AUER.** The Doppler spread - gaining diversity for future mobile radio systems. *Proceedings IEEE Global Telecommunications Conference,* Dezember 2003, vol. 3, 1301-1305
- Performance of low complex antenna diversity techniques for mobile OFDM systems. **A. DAMMANN ; S. KAISER.** Proceedings 3rd International Workshop on Multi-Carrier Spread-Spectrum & Related Topics. September 2001, 53-64
- **A. DAMMANN ; S. KAISER.** Transmit/receive antenna diversity techniques for OFDM systems. *European Transactions on Telecommunications,* September 2002, vol. 13 (5), 531-538
- **S. KAISER.** Performance of multi-carrier CDM and COFDM in fading channels. *Proceedings IEEE Global Telecommunications Conference,* Dezember 1999, 847-851
- **A. M. SAYEED ; B. AAZHANG.** Exploiting Doppler diversity in mobile wireless communications. *Proceedings 1997 Conference on Information Sciences and Systems,* 1997, 287-292